# EUROPÄISCHE PATENTSCHRIFT

(11) **EP 3 171 453 B1**
(45) Veröffentlichungstag und Bekanntmachung des Hinweises auf die Patenterteilung: **13.02.2019**
(21) Anmeldenummer: 15194998.9
(22) Anmeldetag: 17.11.2015
(51) Int. Cl.: H01Q 1/22, H01Q 3/24, H01Q 3/26, H01Q 21/08, H01Q 19/17, G01F 23/284, H01Q 21/06

(54) **ANTENNENVORRICHTUNG UND VERFAHREN ZUM BETREIBEN EINER ANTENNENVORRICHTUNG**
ANTENNA DEVICE AND METHOD FOR OPERATING AN ANTENNA DEVICE
DISPOSITIF D'ANTENNE ET PROCÉDÉ DE FONCTIONNEMENT D'UN DISPOSITIF D'ANTENNE

(43) Veröffentlichungstag der Anmeldung: 24.05.2017
(73) Patentinhaber: VEGA Grieshaber KG, 77709 Wolfach (DE)
(72) Erfinder: WELLE, Roland, 77756 Hausach (DE)
(74) Vertreter: Maiwald Patent- und Rechtsanwaltsgesellschaft mbH

(56) Entgegenhaltungen:
- WO-A1-2010/144936
- WO-A1-2015/120879
- WO-A1-2015/120885
- DE-A1-102004 059 915
- DE-A1-102014 200 038
- US-A1- 2015 103 630

## Beschreibung

### Gebiet der Erfindung

Die vorliegende Erfindung betrifft das technische Gebiet der Messtechnik. Insbesondere betrifft die vorliegende Erfindung eine Antennenvorrichtung, ein Verfahren zum Betreiben einer Antennenvorrichtung und ein Programmelement zum Betreiben einer Antennenvorrichtung.

### Hintergrund der Erfindung

Zur Bestimmung des Füllstands eines Füllguts oder Schüttguts in einem Behälter können topologieerfassende Füllstandmessgeräte verwendet werden. Diese Messgeräte tasten die Füllgut- und/oder Schüttgutoberfläche mit einem elektronischen Signal ab und können die aus der Abtastung abgeleitete Kenntnis der dreidimensionalen Oberflächentopologie des Füllguts und/oder des Schüttguts weiter ausnutzen, um unter Annahme einer bekannten Fläche unterhalb des Füllguts das Volumen des Füllguts und/oder bei bekannter Dichte die Masse oder weitere daraus abzuleitende Größen zu ermitteln. Zur Abtastung wird ein Strahl einer elektromagnetischen Welle über das Füllgut oder das Schüttgut geführt und das Reflexionsverhalten unter unterschiedlichen Winkeln betrachtet und ausgewertet.

Ein Schüttgut mag ein körniges oder auch stückiges Gemenge bezeichnen, das in einer schüttfähigen Form vorliegt. Bestimmt werden die Eigenschaften von Schüttgut durch die Korngröße und der Kornverteilung sowie die Schüttdichte, den Schüttwinkel, die Feuchtigkeit und der Temperatur. Ein Schüttgut kann eine Materialanhäufung auf einer unbegrenzten Fläche oder innerhalb eines Behälters sein.

Ein Füllgut mag allgemein ein Material bezeichnen, das in einen Behälter gefüllt wird. Dabei kann es sich um ein Schüttgut oder auch um eine Flüssigkeit handeln. Insbesondere bei Flüssigkeiten können ungleichmäßige Oberflächen durch Erschütterungen ausgebildet werden, die beispielsweise zur Bildung von wellenförmigen Oberflächen führen.

Eine dreidimensionale (3D) Füllstandmessung oder eine Topologiemessung mit elektromagnetischen Wellen, insbesondere mit Radarsignalen, mag neue Anwendungszielsetzungen bei der Vermessung von Materialen erschließen. Bei Schüttgutmessungen können beispielsweise oftmals nur grobe Messwerte der aktuellen Füllhöhe ermittelt werden. Die ungenaue Angabe der Messwerte kann an der statistischen Verteilung der Anhäufung eines Schüttguts oder Füllguts liegen. Durch die dreidimensionale Füllstandmessung mag sich aufgrund der Möglichkeit der Erfassung des Volumens und/oder der Masse des auf einer Fläche angehäuften Schüttguts oder des in einem Behälter enthaltenen Schüttguts eine hohe Qualität einer Messung erreichen lassen. Diese hohe Qualität mag erreicht werden, indem die Oberfläche des Objekts, Messobjekts, Schüttguts und/oder Füllguts bestimmt wird und daraus mithilfe von bekannten Größen zu der Beschaffenheit des Schüttguts das Volumen, das Material und/oder die Masse des Objekts in guter Annäherung bestimmt wird.

Die Patentschrift DE 10 2007 039 397 B3 beschreibt ein Verfahren zum Betrieb einer Antennengruppe mit mehreren Sendern und mehreren Empfängern sowie eine zugehörige Vorrichtung.

Die Druckschrift WO 2015/052699 A1 betrifft ein Verfahren zum Auswerten eines Inhalts eines Behälters mithilfe einer Vielzahl von akustischen Sende-/Empfangs-Arrays.

Die Druckschrift WO 2015/120885 A1 betrifft eine Messvorrichtung und ein Verfahren zum Erfassen von Eigenschaften eines Objektes.

WO 2010/144936 A1 beschreibt ein Verfahren und eine Vorrichtung zur Berechnung einer Oberfläche eines Füllguts eines Behälters mit einer Vielzahl an Antennen, welche eine synthetische Apertur ausbilden.

### Zusammenfassung der Erfindung

Die Erfindung ist in den unabhängigen Patentansprüchen definiert. Erfindungsgemäß wird ein Füllstandmessgerät gemäß dem unabhängigen Patentanspruch 1, ein Verfahren zum Betreiben einer Antennenvorrichtung eines Füllstandmessgeräts gemäß dem unabhängigen Patentanspruch 13, ein Programmelement zum Betreiben einer Antennenvorrichtung eines Füllstandmessgeräts gemäß dem unabhängigen Patentanspruch 14, und ein computerlesbares Medium mit einem solchen Programmelement gemäß dem unabhängigen Patentanspruch 15 bereitgestellt.

Gemäß einem Aspekt der vorliegenden Erfindung mag eine Antennenvorrichtung, ein Verfahren zum Betreiben einer Antennenvorrichtung, ein Füllstandmessgerät und ein Programmelement zum Betreiben einer Antennenvorrichtung sowie ein computerlesbares Speichermedium zum Betreiben einer Antennenvorrichtung angegeben werden.

Es mag erwünscht sein, ein effektives Messen von Füllständen zu ermöglichen.

Der Gegenstand der Erfindung wird von den unabhängigen Patentansprüchen festgelegt. Weitere Ausführungsbeispiele der Erfindung ergeben sich aus den Unteransprüchen und der folgenden Beschreibung.

Gemäß einem Aspekt der vorliegenden Erfindung wird eine Antennenvorrichtung beschrieben, die eine Steuereinrichtung und eine Antennengruppe aufweist. Die Antennengruppe weist zumindest zwei Sendeeinrichtungen an vorgebbaren Positionen und zumindest zwei Empfangseinrichtungen an vorgebbaren Positionen auf. Die Antennengruppe mag in einem Beispiel als eine lineare Antennengruppe realisiert sein. In einem anderen Beispiel mag die Antennengruppe als ein zweidimensionales Antennenarray mit einer ebenen Ausdehnung realisiert sein. Aufgrund der Anordnung der Sendeeinrichtungen und der Empfangseinrichtungen an vorgebbaren Positionen mag die Lage der Sender und Empfänger zueinander bekannt sein und insbesondere auch ein Abstand dieser Elemente untereinander.

Die Steuereinrichtung ist derart eingerichtet, dass sie die zumindest zwei Sendeeinrichtungen abwechselnd einzeln zum Senden anregt, sodass jede der zumindest zwei Empfangseinrichtungen ein von jeder der zumindest zwei Sendeeinrichtungen erzeugtes Sendesignal empfängt. In einem Beispiel mag vorgesehen sein, dass immer nur genau eine Sendeeinrichtung zur gleichen Zeit sendet, sodass es im Wesentlichen zu keiner Überlagerung der von den zumindest zwei Sendeeinrichtungen ausgesendeten Signale kommen kann. Auf diese Art und Weise mag sichergestellt werden, dass jede Empfangseinrichtung im Wesentlichen nur von einer definierten Sendeeinrichtung ein Signal erhält und dass im Wesentlichen die Signalquelle eines jeden Signals ermittelt werden kann. Alternativ oder zusätzlich zu dem abwechselnden Senden mag eine Codierung des Signals vorgesehen sein, sodass die Quelle des Signals anhand der Codierung identifizierbar ist.

Die Steuereinrichtung ist weiter eingerichtet, zu einem vorgebbaren Zeitpunkt die zumindest zwei Sendeeinrichtungen im Wesentlichen gemeinsam und/oder gleichzeitig zum Senden anzuregen. Bei einer Vielzahl von Sendeeinrichtung mag eine Untergruppe von Sendeeinrichtungen zum gemeinsamen Senden angeregt werden. Die Untergruppe weist die zumindest zwei Sendeeinrichtungen auf. In einem Beispiel mag vorgesehen sein, dass die Sendeeinrichtungen kohärente Signale generieren, sodass es beispielsweise in einer vorgebbaren Entfernung von den zumindest zwei Sendeeinrichtungen zu einer derartigen Überlagerung der kohärenten Signale kommt, dass das resultierende Signal als von einer einzigen Quelle zu stammen scheint. Das im Wesentlichen gemeinsame Anregen der zumindest zwei Sendeeinrichtungen mag aufgrund der Signalüberlagerung des Sendesignals in einem Fernfeld dazu führen, dass jede der zumindest zwei Empfangseinrichtungen ein Empfangssignal empfängt, das von einer einzigen virtuellen Sendeeinrichtung zu stammen scheint. In anderen Worten mag es den zumindest zwei Empfangseinrichtungen nicht möglich sein, anhand des Empfangssignals zu unterscheiden, ob dieses Signal von einer einzigen virtuellen Quelle oder von zumindest zwei unterschiedlichen tatsächlich vorhandenen Quellen stammt, deren Sendesignale sich zu einem einzigen Empfangssignal überlagert haben. Durch die Überlagerung mag der Anschein entstehen, dass das "virtuelle" Signal von der einzigen "virtuellen" Quelle stammt, die sich an einer anderen Position befindet als die Position einer jeden der zumindest zwei Sendeeinrichtungen.

Im Rahmen dieses Textes mögen zur Vereinfachung die Begriffe Sendesignal und Empfangssignal gleichwertig verwendet werden, so dass Eigenschaften, die für das Sendesignal beschrieben sind, auch für das Empfangssignal gelten und umgekehrt.

Die virtuelle Sendeeinrichtung mag an einer vorgebbaren virtuellen Position angeordnet sein und/oder an dieser vorgebbaren Position erscheinen. Eine virtuelle Position mag eine Position sein, an der nicht tatsächlich ein Element vorhanden ist, jedoch an der ein Element vorhanden zu sein scheint. Die virtuelle Position unterscheidet sich von den vorgebbaren Positionen, an denen die zumindest zwei Sendeeinrichtungen und/oder die zumindest zwei Empfangseinrichtungen angeordnet sind. Beispielsweise mag die virtuelle Position in der Mitte zwischen den vorgebbaren Positionen der zwei Sendeeinrichtungen oder in einem Schwerpunkt der zumindest zwei Sendeeinrichtungen auftreten. In einem anderen Beispiel kann zusätzlich oder alternativ zu den Montagepositionen der Sendeantennen und/oder Empfangsantennen auch auf die verwendeten Sendesignale und die Charakteristika der Antennen Einfluss genommen werden, um die Position einer virtuellen Sendeeinrichtung festzulegen.

Gemäß einem anderen Aspekt der vorliegenden Erfindung wird ein Füllstandmessgerät zum Bestimmen eines Füllstands und/oder zum Bestimmen einer Oberflächenstruktur eines Objekts mit einer erfindungsgemäßen Antennenvorrichtung angegeben.

Gemäß noch einem anderen Aspekt der vorliegenden Erfindung wird ein Verfahren zum Betreiben einer Antennenvorrichtung beschrieben, welche eine Antennengruppe mit zumindest zwei Sendeeinrichtungen, welche an vorgebbaren Positionen angeordnet sind, und zumindest zwei Empfangseinrichtungen aufweist, welche an vorgebbaren Positionen angeordnet sind. Die Positionen der zumindest zwei Sendeeinrichtungen sowie die Positionen der zumindest zwei Empfangseinrichtungen mögen sich alle voneinander unterscheiden, sodass eine Sendeeinrichtung oder eine Empfangseinrichtung jeweils eindeutig an einer vorgebbaren Position angeordnet ist. In einem Beispiel, in dem Sende-/Empfangseinrichtungen verwendet werden, mag die Position der jeweiligen Sendeeinrichtung gleich der Position der zugehörigen Empfangseinrichtung sein.

Das Verfahren weist ferner das Anregen der zumindest zwei Sendeeinrichtungen in abwechselnder Art und Weise derart auf, dass jede der zumindest zwei Empfangseinrichtungen ein von jeder der zumindest zwei Sendeeinrichtungen erzeugtes Sendesignal empfängt. Darüber hinaus weist das Verfahren ferner das Anregen der zumindest zwei Sendeeinrichtungen zum gemeinsamen Senden zu einem vorgebbaren Zeitpunkt derart auf, dass jede der zumindest zwei Empfangseinrichtungen ein von einer einzigen virtuellen Sendeeinrichtung erzeugtes Sendesignal empfängt. In anderen Worten mag das bedeuten, dass obwohl die zumindest zwei Sendeeinrichtungen gemeinsam und/oder gleichzeitig zum Senden angeregt werden, aufgrund der physikalischen Anordnung und der Phasenlage der ausgesandten Sendesignale eine Überlagerung derart an den jeweiligen Positionen der Empfangseinrichtungen erfolgen mag, dass das Empfangssignal für jede der zumindest zwei Empfangseinrichtungen als von einer einzigen Quelle zu stammen scheint. Die virtuelle Sendeeinrichtung mag an einer vorgebbaren Position angeordnet sein, insbesondere als dort angeordnet erscheinen. Diese vorgebbare Position unterscheidet sich von den vorgebbaren Positionen der zumindest zwei Sendeeinrichtungen und/oder der zumindest zwei Empfangseinrichtungen, um eine zusätzliche Signalquelle an einer anderen Position zu simulieren. In anderen Worten mag durch das gemeinsame Senden der zumindest zwei Sendeeinrichtungen eine einzige virtuelle Sendeeinrichtung an Positionen erscheinen, die noch nicht von den zumindest zwei Sendeeinrichtungen und/oder den zumindest zwei Empfangseinrichtungen besetzt sind. Folglich mag die virtuelle Sendeeinrichtung als eine zusätzliche Sendeeinrichtung aufgefasst werden, welche im Wesentlichen die gleichen Eigenschaften wie die zumindest zwei Sendeeinrichtungen jede für sich hat.

In einem anderen Beispiel können mehr als zwei Sendeeinrichtungen während einer ersten Phase eines Messzyklus abwechselnd und in einer zweiten Phase eines Messzyklus gemeinsam betrieben werden, um durch den gemeinsamen Betrieb eine zusätzliche virtuelle Sendeeinrichtung zu schaffen. Es mag auch möglich sein, auf diese Art und Weise weitere, zusätzliche virtuelle Sendeeinrichtungen zu schaffen, so dass mit zumindest einer oder einer Vielzahl von virtuellen Sendeeinrichtungen gesendet werden kann. Die virtuellen Sendeeinrichtungen können, in einem Zeitmultiplexbetrieb, abwechselnd betrieben werden oder gemeinsam. In noch einem anderen Beispiel mag das Verfahren zum Betreiben einer Antennenvorrichtung, welche zumindest zwei Sendeeinrichtungen an vorgebbaren Positionen und zumindest zwei Empfangseinrichtungen an vorgebbaren Positionen aufweist, das Anregen der zumindest zwei Sendeeinrichtungen zum Senden nach einem vorgebbaren ersten Zeitschema aufweisen. Das erste Zeitschema mag so vorgegeben sein, dass die von den zumindest zwei Sendeeinrichtungen erzeugten Signale beim Empfangen mit den zumindest zwei Empfangseinrichtungen jeweils einer der zumindest zwei Sendeeinrichtungen zuordenbar sind. Ferner mag das Verfahren das Anregen der zumindest zwei Sendeeinrichtungen zum Senden nach einem vorgebbaren zweiten Zeitschema derart aufweisen, dass die von den Sendeeinrichtungen erzeugten Signale beim Empfangen mit den zumindest zwei Empfangseinrichtungen in einer vorgebbaren Entfernung von den Sendeeinrichtungen als von einer einzigen virtuellen Sendeeinrichtung stammend erscheinen. Das erste und das zweite Zeitschema mag jeweils ein periodisches Zeitschema sein und sich mit einer vorgebbaren Periodendauer wiederholen.

Darüber hinaus mag das Verfahren das Empfangen von Empfangssignalen aufweisen, während das vorgebbare erste Zeitschema aktiv ist und auch das Empfangen von Empfangssignalen während das vorgebbare zweite Zeitschema aktiv ist. Da bekannt ist, bei welchem aktiven Zeitschema das jeweilige Empfangssignal empfangen worden ist, mögen die Empfangssignale jeweils dem ersten und/oder zweiten Zeitschema zuordenbar sein. Durch die Zuordnung zu einem Zeitschema kann bestimmt werden, ob es sich bei einem empfangenen Signal um ein Signal handelt, das von einer einzigen Signalquelle stammt, oder ob es sich um ein Signal handelt, welches von einer virtuellen Signalquelle oder virtuellen Sendeeinrichtung stammt. Die virtuelle Sendeeinrichtung mag von zumindest zwei oder einer Vielzahl von Signalquellen emuliert werden, die gleichzeitig aktiv sind und die durch die Betriebsart den Anschein erwecken, als würden sie von einer einzigen Signalquelle stammen.

Das Verfahren mag weiter vorsehen, dass aus den bekannten Informationen, wie dem vorgebbaren Zeitschema, den vorgebbaren Positionen der Sendeeinrichtungen und/oder den vorgebbaren Positionen der Empfangseinrichtungen, unter Verwendung der während dem ersten Zeitschema und während dem zweiten Zeitschema empfangenen Signale eine Echokurve für eine vorgebbare Raumrichtung gebildet wird. Es mag insbesondere auch möglich sein, unter Verwendung der während dem ersten Zeitschema erfassten Echokurven unter Verwendung von Verfahren der digitalen Strahlformung eine Vielzahl an ersten Echokurven für eine Vielzahl an ersten Raumrichtungen zu bilden. Es mag zudem möglich sein, unter Verwendung der während dem zweiten Zeitschema erfassten Echokurven eine Vielzahl an zweiten Echokurven für eine Vielzahl an zweiten Raumrichtungen zu bilden. Die Vielzahl an ersten Raumrichtungen mag dabei unterschiedlich der Vielzahl an zweiten Raumrichtungen sein, wobei die Vielzahl an ersten Raumrichtungen eine Untermenge der Vielzahl an zweiten Raumrichtungen sein kann. Eine Raumrichtung kann auch als Hauptempfangsrichtung bezeichnet werden.

Es sei daraufhingewiesen, dass die Sendeeinrichtungen und die Empfangseinrichtungen unabhängig voneinander betrieben oder hergestellt werden können. Ein Zusammenhang mag durch die jeweilige Auswerteeinrichtung hergestellt werden, indem eine Zuordnung der Signale zu Zeitbereichen, Zeitintervallen oder Zeitschemata erfolgt. Auch die Sendeeinrichtung und die Auswerteeinrichtung können im Wesentlichen unabhängig voneinander betrieben werden.

Gemäß einem anderen Aspekt der vorliegenden Erfindung wird ein Programmelement zum Betreiben einer Antennenvorrichtung angegeben, das, wenn es von einem Prozessor ausgeführt wird, das erfindungsgemäße Verfahren zum Betreiben einer Antennenvorrichtung ausführt.

Gemäß einem anderen Aspekt der vorliegenden Erfindung wird ein computerlesbares Speichermedium angegeben, auf dem ein Programmcode gespeichert ist, der, wenn er von einem Prozessor ausgeführt wird, das erfindungsgemäße Verfahren ausführt.

Eine Antennenvorrichtung kann beispielsweise in einem Verfahren zum Bestimmen einer Oberfläche des Objekts verwendet werden. Mittels der Antennenvorrichtung mag sich ein Strahl einer elektromagnetischen Welle in verschiedene Raumrichtungen lenken lassen oder aus verschiedenen Raumrichtungen empfangen lassen, ohne dass eine mechanische Bewegung der Antennenvorrichtung dabei ausgeführt werden muss. Dabei werden mit Hilfe von mathematischen Verfahren Phasenunterscheide der Empfangssignale in Abhängigkeit der Position des Sendens und/oder des Empfangens ausgewertet. Die Ablenkung mag daher im Wesentlichen mathematisch und nicht mechanisch erfolgen. Durch solch eine mathematische oder elektronische Ablenkung mit Hilfe von mathematischen Verfahren mag eine Strahlführung oder Abtastung eines Objekts in verschiedenen Raumrichtungen möglich sein. Die Abtastung kommt einer Bewegung eines Strahles in verschiedenen Raumrichtungen gleich. Eine lineare Anordnung von Antennenelementen oder Antennenpatches, beispielsweise von Sendeeinrichtungen und/oder Empfangseinrichtungen, mag eine linienförmige Strahlführung entlang eines Objekts ermöglichen. Eine zweidimensionale Anordnung mag eine zweidimensionale Strahlführung ermöglichen.

In einem Beispiel kann jedoch auch eine mechanische Bewegung einer Antennenvorrichtung in Kombination mit einer elektronischen Veränderung der Raumrichtung eines Strahls einer elektromagnetischen Welle genutzt werden. Verfahren, die in der Lage sind, elektrische Strahlen in verschiedene Raumrichtungen abzustrahlen und/oder aus verschiedenen Raumrichtungen zu empfangen, werden als Verfahren zur digitalen Strahlformung (DBF, Digital Beam Forming) bezeichnet. Die Strahllenkung kann beispielsweise dazu genutzt werden, die Oberfläche eines Objekts, beispielsweise die Oberfläche eines Füllgutes und/oder eines Schüttguts, abzutasten und aufgrund der dreidimensionalen berechneten Struktur Rückschlüsse auf das Volumen und/oder die Masse des Objekts zu treffen. Aus dem ermittelten Volumen und/oder der ermittelten Masse können wiederum Rückschlüsse auf den Füllstand getroffen werden, insbesondere wenn weitere physikalische Eigenschaften des Objekts bekannt sind.

Es mag erwünscht sein, dass ein Füllstandmessgerät im Wesentlichen trotz ungünstiger Umgebungsbedingungen zuverlässig einen Füllstand messen kann.

Die elektronische Abtastung, insbesondere bei Verwendung einer Antennenvorrichtung mit einer Anordnung in Form eines zweidimensionalen Arrays, kann es erlauben im Wesentlichen vollständig auf bewegliche Elemente eines Füllstandmessgeräts zu verzichten. Allein durch mathematische Operationen und die empfangenen Reflexionen eines ausgesendeten elektromagnetischen Signals oder einer elektromagnetischen Welle lässt sich ein Abtaststrahl mit Hilfe der Methoden der digitalen Strahlformung bewegen. Durch die Bewegung des Abtaststrahls ohne mechanische Komponenten mag ein feststehendes Antennenarray oder eine feststehende Antennenvorrichtung zu einer sicheren Füllstandmessung beitragen.

Mittels der vorliegenden Erfindung mag es möglich sein, eine einzelne oder eine Vielzahl von zusätzlichen Antennen zu emulieren. Durch die Emulation der zusätzlichen Antenne kann ein virtuelles Array mit guten Empfangseigenschaften gebildet werden. Ein virtuelles Array oder ein Co-Array kann durch einen zeitlich abwechselnden Betrieb der Sendeeinrichtungen und einer entsprechenden Auswertung der Empfangssignale gebildet werden. Die Bildung eines virtuellen Arrays durch das Vorsehen einer zusätzlichen Sendeeinrichtung, in Form der virtuellen Sendeeinrichtung, mag aufgrund des gewählten Betriebsmodus zur Bildung von Empfangsarrays oder Co-Arrays mit breiten und/oder dichtbesetzten Antennenflächen und/oder Aperturen beitragen. Bei der Ermittlung der Positionen der Elemente eines Co-Arrays kann in einem Beispiel eine digitale Faltung oder diskrete Faltung von Positionen der Sendeelemente mit den Positionen der Empfangselemente zum Einsatz kommen. Die Bildung von Co-Arrays kann genutzt werden, um vorgebbare Formen von Empfangsarrays zu bilden. Das Bilden von Co-Arrays mittels virtueller Sendeeinrichtungen kann zu einer Verbreiterung der Öffnung oder der Apertur des gebildeten virtuellen Arrays beitragen. Diese Verbreiterung der Apertur kann beim Betrieb eines virtuellen Arrays für einen guten Signal-zu-Rauschabstand (Signal-To-Noise, S/N) und/oder für eine gute Winkelauflösung der Antennenvorrichtung genutzt werden. Somit kann das Vorsehen der erfindungsgemäßen Antennenvorrichtung beim Betrieb eines topologieerfassenden Füllstandmessgeräts für eine hohe Erkennungswahrscheinlichkeit für den Füllstand sorgen. Zusätzlich kann die Bildung eines virtuellen Arrays mit Hilfe von virtuellen Sendeeinrichtungen einen Hardwareaufwand zur Realisierung einer Antennenvorrichtung begrenzen und bei der Realisierung des topologieerfassenden Füllstandmessgeräts oder des 3D-Füllstandmessgeräts zu geringen Kosten beitragen. Die Kosten können gering ausfallen, da eine virtuelle, also nicht real vorhandene, zusätzliche Sendeeinrichtung genutzt wird, um die Apertur des entstehenden virtuellen Arrays oder des Co-Arrays zu erhöhen und/oder um den Abstand der Elemente des Co-Arrays untereinander zu verringern. Ein Füllstandmessgerät, welches mit einer Vielzahl von Sendeantennen oder Sendeeinrichtungen ausgestattet ist, welche im Zeitmultiplexverfahren einzeln oder auch in Gruppen betrieben werden, kann eine hohe Messgenauigkeit bieten.

Ein Füllstandmessgeräts, welches zur topologieerfassenden Füllstandmessung eine Antennenvorrichtung mit zumindest zwei Sendern oder mit zumindest zwei Sendeeinrichtungen ausgestattet ist, mag in zwei unterscheidbaren Betriebsphasen unterschiedlich angesteuert werden. Diese Ansteuerung mag vorsehen die zumindest zwei Sendeeinrichtungen derart anzusteuern oder anzutreiben, dass das Messgerät in einer ersten Betriebsphase zumindest eine dieser zumindest zwei Sendeeinrichtungen aktiviert und dass das Messgerät in einer zweiten Betriebsphase zumindest zwei der insgesamt vorhandenen zumindest zwei oder Vielzahl von Sendeeinrichtungen gemeinsam aktiviert. Aufgrund des geregelten Ablaufs kann vermieden werden, dass die Sendesignale markiert werden müssen, um sie zu unterscheiden. Beispielsweise kann vermieden werden, dass die Sendesignale zur Unterscheidung mit unterschiedlichen Sendesignalen codiert werden. In anderen Worten mag der Betrieb eines topologieerfassenden Füllstandmessgeräts gemäß einem Aspekt der vorliegenden Erfindung vorsehen, dass in einer ersten Betriebsphase die Sendeeinrichtungen so angesteuert werden, dass zumindest zwei aktive Sendeeinrichtungen unterschieden werden können, beispielsweise durch ein Zeitmultiplexverfahren, das alternativ zu einem Codierverfahren eingesetzt wird, mit welchem ebenfalls eine Unterscheidung der Quellen möglich ist.

Ein Messzyklus mag zusätzlich zu der ersten Betriebsphase eine zweite Betriebsphase aufweisen, in der zumindest zwei Sendeeinrichtungen gleichartig betrieben werden, sodass im Wesentlichen die von ihnen erzeugten Sendesignale bei einer Überlagerung nicht unterschieden werden können oder als von einer einzigen Quelle stammend erscheinen, da sie beispielsweise gleichförmig sind, also nicht codiert oder uncodiert sind.

In einem anderen Beispiel mag in einer ersten Betriebsphase der Ansteuerung der Antennenvorrichtung eine Vielzahl von Echokurven in Abhängigkeit von einzeln angesteuerten Sendeeinrichtungen erfasst werden und in einer zweiten Betriebsphase eine Vielzahl von Echokurven erfasst werden in Abhängigkeit von gemeinsam angesteuerten Sendeeinrichtungen. Die einzelnen Betriebsphasen mögen in einzelne Zeitpunkte oder Zeitintervalle unterteilt sein, zu denen jeweils genau eine Sendeeinrichtung und/oder gleichzeitig zumindest zwei Sendeeinrichtungen aktiviert sind. Durch die Zuordnung der Aktivierung der Sendeeinrichtungen zu Zeitpunkten, Zeitintervallen und/oder zu Betriebsphasen mag eine Zuordnung der erfassten Echokurven zu den jeweiligen Betriebsphasen oder Zeitpunkten möglich sein. Zusätzlich mag nach dem Durchlauf der ersten und zweiten Betriebsphase eine dritte Betriebsphase vorgesehen sein, während welcher die erste Echokurve und die zweite Echokurve gemeinsam ausgewertet werden, um eine Topologie oder einen daraus abgeleiteten Wert, beispielsweise einen Füllstand, zu bestimmen. Während dieser dritten Betriebsphase mag keine Aktivierung und kein Empfang stattfinden und stattdessen eine einzige oder eine Vielzahl an Echokurven für eine einzige oder eine Vielzahl verschiedener Raumrichtungen nach den Verfahren der digitalen Strahlformung ermittelt werden. In einem Beispiel kann die dritte Betriebsphase parallel zu zumindest einer der ersten Betriebsphase und/oder der zweiten Betriebsphase ablaufen.

In einem anderen Beispiel mag ein Füllstandmessgerät beschrieben werden, welches die Antennenvorrichtung nutzt, wobei das Füllstandmessgerät so eingerichtet sein mag, dass es in einen reinen Füllstandmessmodus wechselt, wenn es eine Verschlechterung von Reflexionsverhältnissen erkennt. Um in den reinen Füllstandmessbetrieb zu wechseln mag im Wesentlichen nur die zweite Betriebsphase ausgeführt werden und die erste Betriebsphase übersprungen werden. In der zweiten Betriebsphase mag die Anzahl der gemeinsam betriebenen Sendeeinrichtungen erhöht werden, um so viele Sendeeinrichtungen wie möglich zu nutzen und um die Signalstärke zu erhöhen. In der zweiten Betriebsphase mögen mindestens zwei Sendeeinrichtungen gleichzeitig aktiviert werden, um ein Sendesignal zu generieren und um dieses Sendesignal mit zumindest zwei Empfangseinrichtungen zu empfangen, um eine digitale Strahlformung zu ermöglichen.

Die Antennenvorrichtung, insbesondere das Verfahren zum Betrieb der Antennenvorrichtung, mag neben dem Anwenden von Verfahren zur digitalen Strahlformung auch das Ansteuern von einer Vielzahl von Sendeelementen oder Sendeeinrichtungen nacheinander im Zeitmultiplexverfahren und das Aktivieren der Sendeeinrichtungen gemeinsam durch das Vorsehen einer weiteren Betriebsphase aufweisen, um ein virtuelles Array mit wenigen physikalischen Komponenten zu bilden. Die Lage der Betriebsphase der gleichzeitigen Aktivierung der Sendeeinrichtungen kann beliebig innerhalb eines Messzyklus angeordnet sein. Durch diese zusätzliche Betriebsphase und durch die gleichzeitige und gleichförmige Nutzung einer Untergruppe von vorhandenen Sendeeinrichtungen oder von allen Sendeeinrichtungen kann die Erfassung der Oberflächentopologie eines Schüttguts mit einer hohen Genauigkeit erfolgen. Diese hohe Genauigkeit mag im Wesentlichen ohne zusätzlichen Hardwareaufwand und ohne zusätzlichem Kosten- oder Gewichtsaufwand erreicht werden. Der gleichzeitige Betrieb von zumindest zwei Sendeeinrichtungen während einer Betriebsphase innerhalb des Messzyklus kann dazu führen, dass eine Vervielfachung der Sendeenergie in Richtung des zu messenden Mediums oder der zu messenden Oberflächentopologie stattfindet, wobei die Vervielfachung der Sendeenergie der Anzahl der gleichzeitig aktiven Sendeeinrichtung entspricht. Diese erhöhte Energieabstrahlung kann das erreichbare S/N insbesondere bei schlecht reflektierenden Medien erhöhen. Es mag vorgesehen sein, während des gleichzeitigen Abstrahlens von Sendesignalen eine Kohärenz zwischen diesen vorzusehen. Es mag auch vorgesehen sein, einen vorgebbaren Phasenversatz zwischen den Sendesignalen während des gleichzeitigen Abstrahlens vorzusehen, um auf diese Weise ein optimiertes, gerichtetes Abstrahlen von Energie in Richtung der Schüttgutoberfläche und damit eine Maximierung der von den Empfangsantennen empfangenen Signalenergie zu erreichen.

Im Gegensatz zur digitalen Strahlformung zur Füllstandmessung mag für die Emulation einer zusätzlichen Antenne dafür vorgesehen sein, dass im Wesentlichen gleichphasige oder kohärente elektromagnetische Wellen erzeugt werden. Durch die Anordnung der emulierten Antenne an einer vorgebbaren Position zwischen den vorhandenen Sendeeinrichtungen und den vorhandenen Empfangseinrichtungen kann ein virtuelles Array oder ein Co-Array gebildet werden, bei dem beispielsweise Aperturlücken verhindert und/oder geschlossen werden und/oder bei dem die Apertur vergrößert wird. Es mag insbesondere auch vorgesehen sein, während des Betriebes des Füllstandmessgerätes zu entscheiden, ob die Sendeantennen in einem Modus angesteuert werden, welcher ein Schließen von Aperturlücken und damit eine Vermeidung von Gitterkeulen oder Grating - Lobes bewirkt, oder ob die Sendeantennen in einem anderen Modus betrieben werden, welcher zu einer größeren Apertur des virtuellen Arrays und somit zu einer verbesserten Winkelauflösung führt.

Bei einem physikalischen Aufbau einer Antennenvorrichtung kann durch die Sicherstellung eines maximalen Abstandes zwischen benachbarten Elementen verhindert werden, dass sich Gitterkeulen (Grating-Lobes) bilden. Der maximale Abstand mag bedeuten, dass bei der physikalischen Anordnung der Sendeeinrichtungen und Empfangseinrichtungen innerhalb der Antennenvorrichtung ein maximaler Abstand der Elemente des Co-Arrays vorgesehen sein soll, der kleiner oder gleich der halben Wellenlänge des verwendeten Sendesignals ist, um die Bildung von einer Gitterkeule zu verhindern. Diese Bedingung mag als Abstandskriterium bezeichnet werden. Aus der physikalischen Anordnung der Antennenelemente ergibt sich auch in Verbindung mit dem gewählten Betriebsmodus die Anordnung eines Co-Arrays und/oder es ergibt sich der maximale Abstand der Elemente des Co Arrays. Aufgrund von immer größer werdenden Frequenzen, um Antennen mit kleinen Bauformen für kleine Behälteröffnungen zu ermöglichen, werden die Wellenlängen der eingesetzten Signale immer kleiner gewählt. Um trotzdem eine große Apertur der Antennenvorrichtung zu ermöglichen und eine gute Fokussierung der Antennenvorrichtung zu erreichen, ist bei Einhaltung des Abstandkriteriums eine entsprechend große Anzahl von Bauelementen oder Antennenelementen notwendig. Eine physikalische Erhöhung der Anzahl der Sendeeinrichtungen und/oder der Empfangseinrichtungen kann durch die Bildung eines virtuellen Arrays oder eines Co-Arrays vermieden werden. Durch den Zeitmultiplexbetrieb einer Vielzahl von Sendeeinrichtungen und das Zufügen einer Betriebsphase der gleichzeitigen Aktivierung einer Vielzahl von Sendeeinrichtungen, kann ein errechnetes virtuelles Array mit einer großen Apertur geschaffen werden. Dieses virtuelle Array kann auch das Abstandskriterium zur Vermeidung von Gitterkeulen oder Grating-Lobes erfüllen, obwohl das physikalische Array weder eine große Apertur aufweist, noch das Abstandskriterium erfüllt. Das virtuelle Array oder das Co-Array ergibt sich aufgrund des Zeitmultiplexbetriebs der Sendeeinrichtungen, der gleichzeitigen Empfangsaktivität aller Empfangseinrichtungen.

Es mag als ein Aspekt der vorliegenden Erfindung angesehen werden, ein Füllstandmessgerät mit einer Antennenvorrichtung mit zumindest zwei Sendern oder mit zumindest zwei Sendeeinrichtungen so zu betreiben, dass eine Steuereinrichtung in einer ersten Betriebsphase zumindest eine der Sendeeinrichtungen alleine aktiviert und in einer zweiten Betriebsphase zumindest zwei der vorhandenen Sender gleichzeitig aktiviert. Diese beiden gleichzeitig aktivierten Sender oder die Vielzahl von gleichzeitig aktivierten Sendern mögen Sendesignale erzeugen, welche im Wesentlichen nicht voneinander unterschieden werden können. Aufgrund des Einsatzes der digitalen Strahlformung und der Vermeidung von mechanischen Komponenten kann ein Füllstandmessgerät oder Messgerät mit der vorgeschlagenen Antennenvorrichtung in extremen Umgebungen eingesetzt werden, beispielsweise in besonders staubigen Umgebungen. Da keine mechanischen beweglichen Komponenten eingesetzt werden, kann die Zuverlässigkeit gegenüber einem topologieerfassenden Füllstandmessgerät mit einer einzigen Antenne erhöht werden, deren Hauptstrahlrichtung rein mechanisch verändert wird. In anderen Worten mag sich in der erfindungsgemäßen Antennenvorrichtung die Hauptstrahlrichtung mathematisch oder elektronisch verändern lassen. Somit kann durch die Verfahren der digitalen Strahlformung eine Bewegung einer Antennenvorrichtung nachgebildet werden.

Gemäß einem anderen Aspekt der vorliegenden Erfindung weist die Antennenvorrichtung eine Auswerteeinrichtung auf. Die Auswerteeinrichtung ist mit der Steuereinrichtung verbunden. Die Steuereinrichtung mag außerdem dazu eingerichtet sein, dass sie den vorgebbaren Zeitpunkt, in dem die zumindest zwei Sendeeinrichtungen gemeinsam zum Senden angeregt werden, durch das Anwenden von zumindest zwei unterschiedlichen Zeitschemata oder durch das Anwenden von zumindest zwei Betriebsphasen bestimmt. Für die Realisierung der zumindest zwei unterschiedlichen Zeitschemata ist die Steuereinrichtung dazu eingerichtet, die zumindest zwei Sendeeinrichtungen nach einem vorgebbaren ersten Zeitschema derart abwechselnd zum Senden anzuregen, dass die von den zumindest zwei Sendeeinrichtungen erzeugten Sendesignale beim Empfangen mit den zumindest zwei Empfangseinrichtungen jeweils einer der zumindest zwei Sendeeinrichtungen zuordenbar ist. Für diese Zuordnung sind die Steuereinrichtung und die Auswerteeinrichtung in einem Beispiel miteinander synchronisiert. Das erste Zeitschema mag beispielsweise ein Zeitmultiplexschema sein, bei dem jeder der zumindest zwei Sendeeinrichtungen eine vorgebbare Zeitdauer der Aktivierung während des ersten Zeitschemas zugeordnet ist, sodass, während eine Sendeeinrichtung aktiviert ist, die andere oder die Vielzahl von anderen Sendeeinrichtungen deaktiviert ist/sind. In einem anderen Beispiel mag eine Unterscheidung von den zumindest zwei Sendeeinrichtungen durch das Vorsehen einer unterschiedlichen Signalcodierung erfolgen.

Die Steuereinrichtung ist weiter dazu eingerichtet, die zumindest zwei Sendeeinrichtungen nach einem vorgebbaren zweiten Zeitschema derart gemeinsam zum Senden anzuregen, dass die von den zumindest zwei Sendeeinrichtungen erzeugten Sendesignale beim Empfangen mit den zumindest zwei Empfangseinrichtungen in einer vorgebbaren Entfernung von den Sendeeinrichtungen als von einer einzigen virtuellen Sendeeinrichtung stammend erscheinen.

Die virtuelle Sendeeinrichtung mag als eine unabhängige eigene Sendeeinrichtung angesehen werden.

Die Auswerteeinrichtung ist auch dazu eingerichtet, dass sie die Empfangssignale über die zumindest zwei Empfangseinrichtungen empfängt, während das vorgebbare erste Zeitschema aktiv ist und auch während das vorgebbare zweite Zeitschema aktiv ist. Die Auswerteeinrichtung ist ferner dazu eingerichtet, aus den vorgebbaren Zeitschemata, aus den vorgebbaren Positionen der Sendeeinrichtungen und/oder aus den vorgebbaren Positionen der Empfangseinrichtungen eine Echokurve für eine vorgebbare Raumrichtung zu bilden. Die Bildung der Echokurve für eine vorgebbare Raumrichtung kann unter Verwendung der während dem ersten Zeitschema und während dem zweiten Zeitschema empfangenen Empfangssignale erfolgen. Die Auswerteeinrichtung mag für das Bilden der Echokurve feststellen, in welchem der Zeitschemata welches Empfangssignal empfangen worden ist. Die Auswerteeinrichtung berücksichtigt bei der Konstruktion des virtuellen Arrays, in welchem Zeitschema welche Echokurven empfangen wurden. So werden die Echokurven des ersten Zeitschemas unter Berücksichtigung der physikalischen Positionen der Sender in der digitalen Strahlformung berücksichtigt. Die Echokurven, die während des zweiten Zeitschemas empfangen werden, werden, im Gegensatz zu den während des ersten Zeitschemas empfangenen Echokurven, unter Berücksichtigung der virtuelle Senderposition in der digitalen Strahlformung berücksichtigt, wobei sich die virtuelle Senderposition aus den physikalischen Positionen derjenigen Sender ergibt, die gleichzeitig aktiviert sind. Da das erste und zweite Zeitschema in einer beliebigen Reihenfolge hintereinander ablaufen kann, mag sich eine gesamte Messzyklusdauer aus den Zeitdauern der beiden Zeitschemata zusammensetzen. Sollte eine dritte Betriebsphase vorgesehen sein, kann ein Messzyklus auch diese dritte Betriebsphase aufweisen.

Eine Echokurve mag das Reflexionsverhalten eines Sendesignals und das Reflexionsverhalten eines Objekts in einer vorgebbaren Empfangsrichtung angeben. Durch das Variieren der Empfangsrichtung mag sich die Oberfläche eines Objekts, eines Füllstands oder eines Schüttguts abtasten lassen, ohne dass die Antennenvorrichtung bewegt werden muss. Die Echokurve mag ein Maß für den Abstand der Oberfläche des Objekts zu einer Empfangseinrichtung angeben. Durch das Auswerten der verschiedenen Echokurven mag sich die Topologie der Oberfläche des Objekts rechnerisch ermitteln lassen. Wenn weitere Angaben über das Objekt bekannt sind, wie beispielsweise das verwendete Material des Objekts, können das Volumen des Objekts und insbesondere das Volumen eines Füll- und/oder Schüttguts ermittelt werden. Die Auswerteeinrichtung mag ferner so eingerichtet sein, dass sie aus den einzelnen Echokurven, die sie für die verschiedenen Raumrichtungen ermittelt, einen Wert für einen Füllstand ermittelt.

Gemäß einem anderen Aspekt der vorliegenden Erfindung sind die vorgebbaren Positionen von benachbarten Sendeeinrichtungen und/oder von benachbarten Empfangseinrichtungen in einem Abstand angeordnet, der kleiner oder gleich der halben Wellenlänge der verwendeten Signale ist.

Da das Empfangssignal ein reflektiertes Sendesignal ist, richtet sich die Wellenlänge insbesondere nach der Wellenlänge des verwendeten Sendesignals. Die Wellenlänge für die zumindest zwei Sendeeinrichtungen ist im Wesentlichen gleich gewählt, sodass für die Antennenvorrichtung die gleiche Wellenlänge als Grundlage dient. In einem Beispiel beträgt die Wellenlänge ungefähr 3,975 mm. Sind die Sendeeinrichtungen und/oder Empfangseinrichtungen rasterförmig angeordnet, kann sich das Rastermaß nach der Wellenlänge richten. Ein Co-Array wird so gebildet, dass die Abstandsbedingung eingehalten wird.

Gemäß einem anderen Aspekt der vorliegenden Erfindung ist die Auswerteeinrichtung dazu eingerichtet aus der Antennengruppe, insbesondere aus den von den zumindest zwei Sendeeinrichtungen versendeten und den von den zumindest zwei Empfangseinrichtungen empfangenen Signalen ein virtuelles Array zu bilden.

Ein virtuelles Array kann aus reinen physikalischen Sende- und/oder Empfangseinrichtungen gebildet werden, die in einem Zeitmultiplexbetrieb betrieben werden und aus deren Anordnung das virtuelle Array berechnet wird. Ein virtuelles Array mag berechnet werden, wenn an jeder Position einer Sendeeinrichtung die Gruppe der Empfangseinrichtungen durch das Ausführen einer digitalen Faltung reproduziert wird. Zur Erzeugung besonders ausgestalteter virtueller Arrays können auch eine zusätzliche virtuelle Sendeeinrichtung und die zugehörigen Empfangssignale in die Berechnung einbezogen werden, wenn ein Messzyklus entsprechend auf eine Zeitdauer erweitert wird, während welcher zumindest zwei Sendeeinrichtungen oder eine Gruppe von Sendeeinrichtungen gleichförmig und gleichzeitig betrieben werden.

Gemäß einem anderen Aspekt der vorliegenden Erfindung sind die zumindest zwei Sendeeinrichtungen in Bezug auf einen Bezugspunkt angeordnet, wobei die virtuelle Sendeeinrichtung als in dem Bezugspunkt positioniert erscheint.

Der Bezugspunkt kann beispielsweise bei der Hälfte des Abstandes zwischen den zumindest zwei Sendeeinrichtungen liegen. Werden diese beiden Sendeeinrichtungen gleichzeitig mit demselben Signal betrieben, erscheint im Fernfeld, d. h. in einem bestimmten Abstand von den beiden Sendeeinrichtungen, eine einzige virtuelle Sendeeinrichtung als in dem Bezugspunkt angeordnet.

Gemäß noch einem anderen Aspekt der vorliegenden Erfindung erzeugen die zumindest zwei Sendeeinrichtungen ein unterscheidbares Sendesignal durch Anwenden eines Zeitmultiplexverfahrens und/oder durch Anwenden eines Codierverfahrens. Der Einsatz eines Entsprechenden Verfahrens mag es erlauben, die Signalquelle jeweils anhand des Signals zu identifizieren.

Da die Erzeugung einer virtuellen Sendeeinrichtung von dem gemeinsamen Betrieb von zumindest zwei Sendeeinrichtungen abhängt, mag es sinnvoll sein, den vorgebbaren Zeitpunkt des Umschaltens von dem getrennten Betrieb der Sendeeinrichtungen zu dem gemeinsamen oder gleichzeitigen Betrieb der Sendeeinrichtungen zu erkennen. Dazu mag ein erstes Zeitschema und ein zweites Zeitschema genutzt werden. Ein Zeitmultiplexverfahren mag es erlauben, zu einem vorgebbaren Zeitpunkt zwischen dem ersten Zeitschema und dem zweiten Zeitschema umzuschalten. Ein Codierverfahren mag es erlauben, auch bei einem gleichzeitigen Betrieb der zumindest zwei Sendeeinrichtungen den jeweiligen Sendeeinrichtungen ein Empfangssignal zuzuordnen. Somit mag nicht ein Zeitschema, sondern ein Codierschema umgeschaltet werden und während des getrennten Betriebs mag ein Codierverfahren angewendet werden, wohingegen während des gleichförmigen Betriebs das Codierverfahren abgeschaltet wird.

Gemäß einem anderen Aspekt der vorliegenden Erfindung ist die Steuereinrichtung eingerichtet, die zumindest zwei Sendeeinrichtungen mit einem frequenzmodulierten Dauerstrichsignal oder einem Frequency-Modulated Continuous Wave (FMCW) Signal zum Senden anzuregen.

Gemäß einem anderen Aspekt der vorliegenden Erfindung ist zumindest eine der zwei Sendeeinrichtungen und eine der zumindest zwei Empfangseinrichtungen als eine gemeinsame Sende-/Empfangseinrichtung realisiert, die sowohl ein Signal senden als auch ein Signal empfangen kann.

Das Verwenden von Sende-/Empfangseinrichtungen mag es ermöglichen, physikalischen Platz in einer Antennenvorrichtung zu sparen.

Gemäß einem anderen Aspekt der vorliegenden Erfindung ist die Summe der Zeitdauern aus dem vorgebbaren ersten Zeitschema und dem vorgebbaren zweiten Zeitschema bestimmend für die Dauer eines Messzyklus. Da das zweite Zeitschema an das erste Zeitschema angehängt wird, mag sich gegenüber dem reinen Zeitmultiplexbetrieb einer Antennenvorrichtung die Messzyklusdauer erhöhen. Allerdings mag durch die Erhöhung der Messzyklusdauer eine Reduktion der Baugröße und/oder der Anzahl der Bauteile eines Antennenarrays oder einer Antennenvorrichtung erreicht werden.

Gemäß einem anderen Aspekt der vorliegenden Erfindung mag die Auswerteeinrichtung eingerichtet sein eine Gewichtung der Empfangssignale durchzuführen. Alternativ und/oder zusätzlich kann die Sendeeinrichtung eingerichtet sein, eine Gewichtung der Sendesignale durchzuführen.

Durch das Emulieren einer zusätzlichen Antenne, indem durch den gleichzeitigen Betrieb von zumindest zwei Sendeeinrichtungen eine virtuelle Sendeeinrichtung emuliert wird, mag es bei der Signalauswertung zu Überlagerungen oder Signalerhöhungen der resultierenden berechneten Signale eines Co-Arrays kommen, die zu ungenauen Messergebnissen führen können. Eine Gewichtung kann eine solche Überlagerung reduzieren und/oder verhindern. Ein Beispiel für eine Gewichtungsfunktion mag eine Taperingfunktion, beispielsweise eine Hamming-, Tylor- oder Blackman Taperingfunktion, sein, die eine Gewichtung von einzelnen Empfangssignalen der zumindest zwei Empfangseinrichtungen vornimmt.

Gemäß einem anderen Aspekt der vorliegenden Erfindung ist die Antennenvorrichtung als ein Zweileitergerät ausgeführt, wobei eine Energieversorgungsleitung auch zur Übertragung von Daten genutzt wird.

Beispielsweise ist ein Füllstandmessgerät zur Erfassung einer Topologie derart eingerichtet, dass die benötigte Energie ausschließlich über eine Zweileiterverbindung bezogen wird. Insbesondere sind die Steuereinrichtung und/oder die Auswerteeinrichtung als Zweileitergerät ausgeführt. Diese Zweileiterverbindung mag auch zur Kommunikation ausgeführt sein, insbesondere zur Ausgabe von zumindest einem Messwert oder einem daraus abgeleiteten Messwert, zum Beispiel einem Füllstand.

Gemäß einem anderen Aspekt der vorliegenden Erfindung wird ein Füllstandmessgerät zum Bestimmen eines Füllstands und/oder zum Bestimmen einer Oberflächenstruktur eines Objekts mit einer erfmdungsgemäßen Antennenvorrichtung angegeben.

Die geringe Bauform der Antennenvorrichtung kann auch zu einer kleinen Bauform des Füllstandmessgeräts führen, wobei gleichzeitig aufgrund der Emulation einer zusätzlichen Sendeeinrichtung eine hohe Messgenauigkeit erreicht werden kann.

Gemäß einem anderen Beispiel der vorliegenden Erfindung ist die Auswerteeinrichtung eingerichtet, ein Verfahren zur digitalen Strahlformung anzuwenden.

Die digitale Strahlformung erlaubt es im Wesentlichen ohne eine mechanische Bewegung einen Raumbereich in verschiedenen Raumwinkeln mittels der Antennenvorrichtung zu betrachten und somit ohne mechanische Bewegung der Antennenvorrichtung eine Oberfläche eines Objekts oder eines Füllguts abzutasten und zu erfassen. Es können innerhalb einer einzigen Messung alle möglichen Hauptstrahlrichtungen gleichzeitig erfasst werden.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von dem Text offenbart angesehen wird, die sich auf unterschiedliche Kategorien von Gegenständen bezieht. Insbesondere soll auch eine Kombination zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein Füllstandmessgerät mit einer Antennenvorrichtung gemäß einem exemplarischen Ausführungsbeispiel der vorliegenden Erfindung.
Fig. 2 zeigt eine perspektivische Darstellung einer linearen Parabolantennenvorrichtung gemäß einem exemplarischen Ausführungsbeispiel der vorliegenden Erfindung.
Fig. 3 zeigt eine perspektivische Darstellung eines zweidimensionalen Antennenarray gemäß einem exemplarischen Ausführungsbeispiel der vorliegenden Erfindung.
Fig. 4 Zeigt eine Antennenvorrichtung mit linear angeordneten Sendeeinrichtungen und Sende-/Empfangseinrichtungen gemäß einem exemplarischen Ausführungsbeispiels der vorliegenden Erfindung.
Fig. 5 zeigt verschiedene Phasen eines Simulationsprogramms zur Bildung eines virtuellen Arrays für die im Zeitmultiplexbetrieb betriebene Antennenvorrichtung aus Fig. 4 zum besseren Verständnis der vorliegenden Erfindung
Fig. 6 zeigt ein Antennendiagramm für das in Fig. 5 dargestellte virtuelle Array zum besseren Verständnis der vorliegenden Erfindung.
Fig. 7 zeigt verschiedene Phasen eines Simulationsprogramms zur Bildung eines virtuellen Arrays mittels der Emulation einer zusätzlichen Sendeeinrichtung mit der Antennenvorrichtung aus Fig. 4 gemäß einem exemplarischen Ausführungsbeispiel der vorliegenden Erfindung.
Fig. 8 zeigt ein Antennendiagramm für das in Fig. 7 dargestellte virtuelle Array gemäß einem exemplarischen Ausführungsbeispiel der vorliegenden Erfindung.
Fig. 9 zeigt verschiedene Phasen eines Simulationsprogramms zur Bildung eines virtuellen Arrays mittels der Emulation einer zusätzlichen Sendeeinrichtung mit der Antennenvorrichtung aus Fig. 4 mit einer Korrektur gemäß einem exemplarischen Ausführungsbeispiel der vorliegenden Erfindung.
Fig. 10 zeigt ein Antennendiagramm für das in Fig. 9 dargestellte virtuelle Array gemäß einem exemplarischen Ausführungsbeispiel der vorliegenden Erfindung.
Fig. 11 zeigt ein Flussdiagramm für ein Verfahren zum Betreiben einer Antennenvorrichtung gemäß einem exemplarischen Ausführungsbeispiel der vorliegenden Erfindung.

### Detaillierte Beschreibung von Ausführungsbeispielen

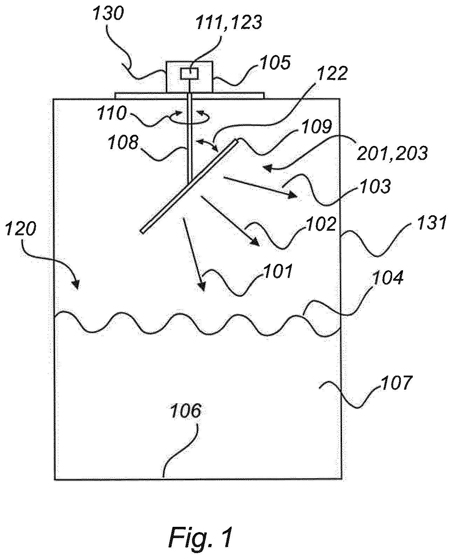

Die Darstellungen in den Figuren sind schematisch und nicht maßstäblich. In der folgenden Beschreibung der Fig. 1 bis 11 werden die gleichen Bezugsziffern für gleiche oder sich entsprechende Elemente verwendet.

Ohne Einschränkung der allgemeinen Gültigkeit, mag in der folgenden Beschreibung der Figuren im Wesentlichen auf eine Linearantenne 201 eingegangen werden. Die Beschreibung und Prinzipien gelten jedoch auch entsprechend für die zweidimensionale Arrayantenne 203.

Fig. 1 zeigt ein Füllstandmessgerät 105 oder topologieerfassendes Radarmessgerät 105 gemäß einem exemplarischen Ausführungsbeispiel der vorliegenden Erfindung. Das Messgerät 105 oder Feldgerät 105, insbesondere das Füllstandmessgerät 105, ist in der Lage, Echosignale oder Echokurven aus unterschiedlichen Winkelbereichen 101, 102, 103 zu erfassen. Das Füllstandmessgerät 105 weist eine Steuereinrichtung 111 und eine Auswerteeinrichtung 123 auf und wird über die Zweileiterverbindung 130 mit Energie versorgt. Die Zweileiterverbindung 130 kann auch zur Übertragung von Daten genutzt werden, beispielsweise um den ermittelten Füllstand an eine zentrale Warte (nicht gezeigt in Fig. 1) weiterzugeben. Die Winkelbereiche 101, 102, 103 sind als Beispiele für einstellbare Hauptstrahlrichtungen und/oder Hauptempfangsrichtungen zu sehen. Zu jeder erfassten Echokurve wird die Distanz zum jeweiligen Punkt der Oberfläche des Schüttguts 104 oder Füllguts 104 ermittelt. Durch numerische Integration dieser Distanzwerte und unter Postulierung einer ebenen Oberfläche 106, insbesondere eines ebenen Behälterbodens 106, unter dem Schüttgut 104 oder unter dem Füllgut 104 kann das Volumen der Schütthalde 107 ermittelt werden. Die Schütthalde 107, Schüttgut-Halde 107 oder der bulk material heap 107 ist eine Halde, welche von dem Schüttgut 104 gebildet wird, wenn das Schüttgut 104 in den Behälter 131 gefüllt wird. Wenn die Dichte des Schüttguts 104 bekannt ist, lässt sich nach der Ermittlung des Verlaufs der Oberfläche 120 des Schüttguts 104 die Masse des Schüttguts berechnen. Außerdem mag es möglich sein, einen Füllstand des Schüttguts 104 innerhalb eines Behälters 131 zu ermitteln, beispielsweise durch Mittelwertbildung einer Vielzahl von ermittelten Abständen.

Das Füllstandmessgerät 105 weist die Antennenhalterung 108 mit der Antennenbasis 109 zur Befestigung einer Antenne 201, 203 oder Antennenvorrichtung 201, 203 auf. Je nach Ausgestaltung des Füllstandmessgeräts 105 kann die Antennenbasis 109 ein mechanisches Verstellen einer Hauptstrahlrichtung einer an der Antennenbasis 109 angebrachten Antennenvorrichtung 201, 203 beispielsweise durch ein Drehen der Antennenhalterung 108 um eine Drehachse ermöglichen und/oder durch ein Verkippen um einen Kippwinkel 122. Das Drehen ist mit dem Pfeil 110 angedeutet und das Kippen ist durch den Pfeil 122 dargestellt.

Zusätzlich oder alternativ zu dem mechanischen Drehen 110 und/oder dem Verkippen 122 kann die Hauptempfangsrichtung 101, 102, 103 der Antenne 201, 203 oder Antennenvorrichtung 201, 203 durch Verfahren der digitalen Strahlformung ergänzt oder ersetzt werden. Als Hauptempfangsrichtung 101, 102, 103 mag in Fig. 1 diejenige Richtung bezeichnet werden, für welche gerade eine Echokurve in einem vorgebbaren Winkel zu der Antennenbasis 109 berechnet wird. Pro Messung kann eine Vielzahl von Hauptempfangsrichtungen ermittelt werden. Um die Oberfläche 120 des Schüttguts 104 oder eines anderen Objekts 104 abtasten zu können, wird ein Sendesignal von einer Sendeeinrichtung der Antennenvorrichtung in im Wesentlichen alle Raumrichtungen versandt. Es erfolgt sozusagen eine Beleuchtung des interessierenden Bereichs mit einem Kugelstrahler. Durch eine Auswertung der von den Empfangseinrichtungen der Antennenvorrichtung empfangenen Signale kann ein Empfangssignal in einer beliebigen Raumrichtung 101, 102, 103 bestimmt werden. So kann mit nur einer Messung ein Empfangssignal in den unterschiedlichen Winkelbereichen 101, 102, 103 gebildet werden, um so die Oberfläche 120 des Schüttguts 104 unter den verschiedenen Winkelbereichen zu erfassen. Durch die Erfassung eines Empfangsstrahls unter den verschiedenen Winkelbereichen, lässt sich ein Empfangssignal über die Oberfläche 120 des Füllgutes führen. Zur Erfassung der verschiedenen Raumbereiche kommen Verfahren der digitalen Strahlformung (DBF) zum Einsatz und es kann im Wesentlichen ohne eine mechanische Winkelverstellung 122 oder Drehung 110 eine Abtastung der Oberfläche 120 des Schüttguts 104 durchgeführt werden.

Um eine digitale Strahlformung zu ermöglichen, mag eine Antennenvorrichtung 201, 203 mit einer Vielzahl von Sendeeinrichtungen und Empfangseinrichtungen genutzt werden, welche an dem Antennenträger 109 oder der Antennenbasis 109 angebracht ist.

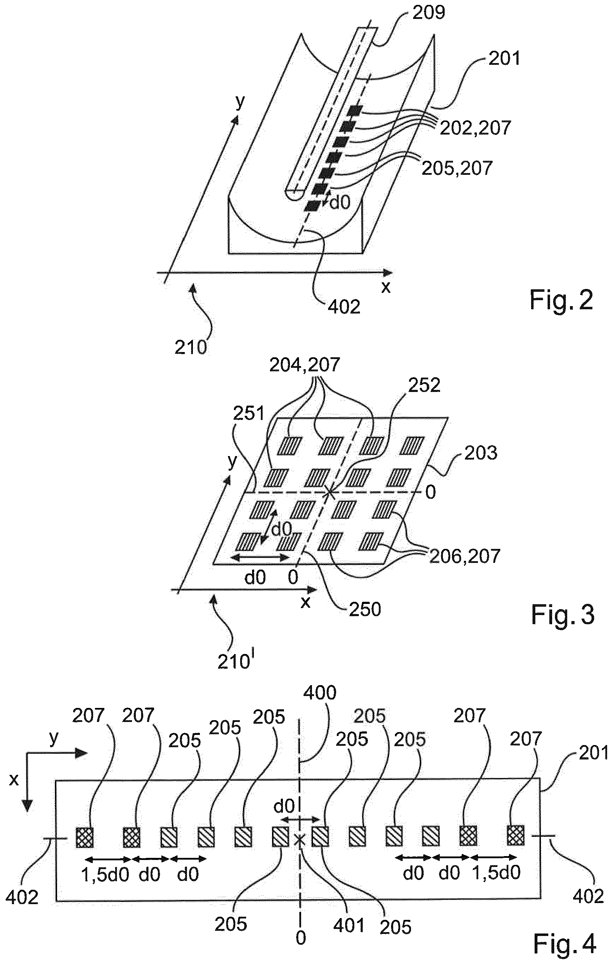

Fig. 2 zeigt eine perspektivische Darstellung einer linearen Parabolantennenvorrichtung 201 gemäß einem exemplarischen Ausführungsbeispiel der vorliegenden Erfindung. Da die Sendeeinrichtungen 202 und die Empfangseinrichtungen 205 linear parallel zu der in Fig. 2 dargestellten y-Achse des mit Bezugsziffer 210 bezeichneten Koordinatensystems 210 angeordnet sind, kann die Antennenvorrichtung 201 als Linear-Array 201 bezeichnet werden. Die Zusammenfassung der Sendeeinrichtungen 202 und Empfangseinrichtungen 205 kann als Antennengruppe bezeichnet werden. Die Sendeelemente 202 oder die Sendeeinrichtungen 202 werden von der Steuereinrichtung 111 angesteuert und die Empfangselemente 205 oder Empfangseinrichtungen 205 werden von der Auswerteeinrichtung 123 betrieben, um eine gewünschte Strahlformung zu erreichen und um eine Oberfläche 120 des Schüttguts 104 in einem vorgebbaren Bereich abtasten zu können. In Kombination mit der drehbaren Antennenhalterung 108 kann die Parabolrinne 201 oder das Linear-Array 201 auf dem Antennenträger 109 montiert zum Einsatz kommen. Das Linear-Array 201 kann eine mechanische Fokussierung der von den Sendeeinrichtungen 202 oder den Antennenelementen 202 abgestrahlten und/oder von den Empfangseinrichtungen 205 empfangenen elektromagnetischen Wellen entlang der in dem Koordinatensystem 210 dargestellten x-Richtung vornehmen. Für die mechanische Fokussierung ist eine Linearlinse 209 oder ein lineares Hyperbel 209 vorgesehen. Die Fokussierung der entsprechenden Signale entlang der y-Richtung des Koordinatensystems 210 oder entlang der Linearrichtung 402 erfolgt hingegen erst nach der Erfassung der empfangenen Signale innerhalb der Auswerteeinheit 123 oder Auswerteeinrichtung 123 durch digitale Strahlformung (DBF). Auf diese Art und Weise kann auch eine gezielte Steuerung der Hauptempfangsrichtung der Antenne 121 in der y-Richtung erfolgen. Anstelle von reinen Sendeeinrichtungen 202, und reinen Empfangseinrichtungen 205 können auch Sende-/Empfangseinrichtungen 207 genutzt werden, die an derselben Position senden und zugleich auch empfangen können. Sendeeinrichtungen 202, 204 und Empfangseinrichtungen 205, 206 können durch Sende-/Empfangseinrichtungen 207 ersetzt werden. Die einzelnen Sendeeinrichtungen 202, 204, 207 und/oder Empfangseinrichtungen 205, 206, 207 weisen untereinander einen Abstand von d₀ auf und orientieren sich an einem Raster.

Fig. 3 zeigt ein zweidimensionales (2D) Antennenarray 203 gemäß einem exemplarischen Ausführungsbeispiel der vorliegenden Erfindung. Das zweidimensionale Antennenarray weist eine Ausdehnung in zwei Raumrichtungen, beispielsweise in die x-Richtung und die y-Richtung auf, wie durch das Koordinatensystem 210' angedeutet. Fig. 3 zeigt die Anordnung der Sendeeinrichtungen 204 und der Empfangseinrichtungen 206 auf dem Antennenarray 203. Anstelle von reinen Sendeeinrichtungen 204, und reinen Empfangseinrichtungen 206 können Sende-/Empfangseinrichtungen 207 genutzt werden, die an derselben Position senden und zugleich auch empfangen können. Die einzelnen Sendeeinrichtungen und/oder Empfangseinrichtungen weisen untereinander einen Abstand von d₀ auf. Ein Antennenarray 203 kann in Kombination mit einer starren Antennenhalterung 108 und einem starren Antennenträger 109 eingesetzt werden. In Kombination mit der statischen Antennenhalterung 108 kann das zweidimensionale Antennenarray 203 trotz statischer Anordnung eine Abtastung in zwei Raumrichtungen ermöglichen. Das zweidimensionale Antennenarray 203 weist eine Vielzahl von Sendeeinrichtungen 204 und/oder Empfangseinrichtungen 206 entlang der x-Achse und entlang der y-Achse auf. Diese sind symmetrisch zu den Symmetrieachsen 250 und 251 angeordnet. Die Sendeeinrichtungen 204, 207 und Empfangseinrichtungen 206, 207 sind rasterförmig in einem Rasterabstand d₀ angeordnet. Es mag auch vorgesehen sein, eine Vielzahl i unterschiedlicher Rasterabstände d;, die sich von dem Grundabstand d₀ unterscheiden, innerhalb einer Sendeeinrichtung 204, 207 und/oder Empfangseinrichtung 206, 207 zu realisieren, so dass zumindest eine Untergruppe der Einrichtungen in unregelmäßigen Abständen angeordnet ist. Das Einhalten des durch das Abstandskriterium vorgegebenen Abstands von λ/2 kann Gitterkeulen reduzieren. Ein entsprechend geladenes Programm, welches für das Ansteuern und/oder das Auswerten des zweidimensionalen Antennenarrays 203 oder des linearen Antennenarrays 201 eingerichtet ist, verknüpft die von den Empfangseinrichtungen 205, 206, 207 empfangenen Signale gemäß dem Verfahren der zweidimensionalen digitalen Strahlformung oder dem Verfahren der linearen digitalen Strahlformung und gemäß der eingesetzten Antennenbauform 201, 203. Durch diese Verknüpfung und Signalverarbeitung kann gezielt eine Ablenkung der Empfangsrichtungen sowohl entlang der x-Achse als auch entlang der y-Achse herbeigeführt werden. Die Hauptempfangsrichtung mag diejenige Richtung bezeichnen, in der ein von der Antennenvorrichtung 201, 203 erzeugtes Antennendiagramm eine Hauptkeule hat. Das mag bedeuten, dass in Richtung der Hauptstrahlrichtung, Hauptempfangsrichtung oder in Richtung der Hauptkeule des Antennendiagramms die größte Empfindlichkeit für die Antenne vorhanden ist und diese Richtung somit als Hauptstrahlrichtung und/oder Hauptempfangsrichtung bezeichnet wird.

Signale werden auch außerhalb der Hauptempfangsrichtung über Nebenkeulen empfangen, jedoch mit einer deutlich höheren Dämpfung als in der Hauptempfangsrichtung. Die Hauptempfangsrichtung und insbesondere die Hauptkeule des Antennendiagramms kann durch das Verfahren der digitalen Strahlformung geändert werden.

Um die digitale Strahlformung zu erreichen, kann als Alternative zu dem Zeitmultiplexverfahren ein speziell codiertes Sendesignal, z.B. eine orthogonale Signalform, benutzt werden. Wenn ein codiertes Sendesignal zur Unterscheidung einzelner Sender 202, 204 genutzt wird, insbesondere zur Unterscheidung einzelner Sendepositionen, können die Sendeeinrichtungen 202, 204 gleichzeitig zum Senden angeregt werden. Dadurch kann ein Messzyklus verkürzt werden. Die Codierung ermöglicht es trotz des gleichzeitigen Sendens die Position der Signalquelle zu bestimmen, um so die von jedem einzelnen der Sendeeinrichtungen 202, 204 erzeugten Signale unterscheiden zu können. Sowohl das Zeitmultiplexverfahren als auch die Codierung kann genutzt werden ein Empfangssignal eindeutig einer bestimmten Sendeeinrichtung 202, 204, 207 der Vielzahl von Sendeeinrichtungen 202, 204, 207 zuzuordnen.

Gitterkeulen, sog. Grating-Lobes, entstehen als weitere empfindliche Raumrichtungen neben einer Hauptstrahlrichtung oder Hauptempfangsrichtung in einem Antennendiagramm und können zu Signalstörungen führen, da nicht genau unterschieden werden kann, ob ein Signal aus einer Hauptempfangsrichtung oder aus der Grating-Lobe einstrahlt. Störungen werden nicht ausreichend gedämpft, wenn sich Grating-Lobes bilden. Unter Gitterkeulen kann somit verstanden werden, dass es keine eindeutige Hauptempfangsrichtung in dem mittels digitaler Strahlformung erzeugten Antennendiagramm gibt, wodurch eine entsprechende Antennenvorrichtung nicht in eine spezifische Richtung fokussiert sein mag. Um solche ungewünschten Gitterkeulen zu vermeiden, kann beim Einsatz des Verfahrens der digitalen Strahlformung die physikalische Distanz d₀ zwischen zwei benachbarten Antennenelementen 202, 204, 205, 206, 207 kleiner oder gleich der halben Wellenlänge der verwendeten Radarsignale, Sendesignale und/oder Empfangssignale gewählt werden. Diese Einschränkung kann aufgrund der für die bei der Füllstandmesstechnik eingesetzten Radarsignale im Bereich von 79 GHz zu Abständen der Antennenelemente 202, 205, 204, 206, 207 zueinander von d₀ =3.975mm führen und zu einer hohen Zahl an Antennenelementen 202, 205, 204, 206, wenn eine Antenne eine Ausdehnung von typischerweise 100mm hat. Das Einhalten des Abstandskriteriums mit physikalischen Bauelementen kann zu hohen Herstellkosten führen. Eine große Anzahl an Sendeeinrichtungen 202, 204, 207 und/oder Empfangseinrichtungen 205, 206, 207 in einer Antennenvorrichtung 201, 203 kann auch zu einem hohen Schaltungsaufwand und damit zu hohen Herstellkosten einer Antennenvorrichtung 201, 203 und eines Füllstandmessgeräts 105 führen.

Außerdem können Füllstandmessgeräte 105 bei der Verwendung einzelner Sendeelemente 202, 204 im Zeitmultiplex wegen der begrenzten Leistung von verfügbaren Halbleiterbauelementen nur mit einer begrenzten Sendeleistung in Richtung des Schüttguts 104 abstrahlen. Bei der Abstrahlung findet noch keine digitale Strahlformung statt, sodass mittels der Sendeeinrichtungen 202, 204, 207 die gesamte Oberfläche 120 eines Schüttguts oder Objekts 104 angestrahlt oder beleuchtet werden muss. Soll mit solch einer schwachen Strahlung ein Schüttgut mit schwach reflektierenden Medieneigenschaften gemessen werden, so kann ein von diesem Schüttgut 104 reflektiertes Signal so gering sein, dass eine Erfassung im Wesentlichen nicht mehr möglich ist.

Um eine kleine Bauform einer Antennenvorrichtung 201, 203 zu ermöglichen und eine zusätzliche Antenne zu emulieren, wird eine spezielle Anordnung der Sendeeinrichtungen 202, 204 und Empfangseinrichtungen 205, 206 gewählt.

Fig. 4 zeigt eine Draufsicht auf eine Antennenvorrichtung 201 oder auf ein physikalisches Array 201 mit linear angeordneten Sendeeinrichtungen 202 und Sende-/Empfangseinrichtungen 207 gemäß einem exemplarischen Ausführungsbeispiels der vorliegenden Erfindung. Die Sende-/Empfangseinrichtungen 207 werden statt reiner Empfangseinrichtungen 206 eingesetzt, die nur empfangen können. Die Sende-/Empfangseinrichtungen 207 können in Abhängigkeit ihrer Ansteuerung entweder als Sendeeinrichtung 202 oder als Empfangseinrichtung 205 betrieben werden. Somit könnte die Antennenvorrichtung 201 auch aus lediglich Sende-/Empfangseinrichtungen 207 aufgebaut sein, von denen ein Teil als Sendeeinrichtung 202 und ein anderer Teil als Empfangseinrichtung 205 betrieben wird. Folglich mag es möglich sein, elektronisch die Anordnung der Sendeeinrichtungen 202 und Empfangseinrichtungen 205 bzw. 207 und 206 in dem Array 203 zu verändern.

Die Sende-/Empfangseinrichtungen 207 und Empfangseinrichtungen 205 sind in einer rechteckigen Parabolrinne linear bezogen auf eine Bezugslinie 402 in y-Richtung angeordnet. Die y-Richtung verläuft parallel zu den längeren der vier Seiten der rechteckförmigen Linearantenne. Dabei sind die Sende-/Empfangseinrichtungen 207 und Empfangseinrichtungen 205 an einem Raster ausgerichtet, welches sich auf die verwendete Wellenlänge der Sendesignale bezieht. Durch das Raster werden die vorgebbaren Positionen der Sende-/Empfangseinrichtungen 207 und Empfangseinrichtungen 205 bestimmt. Der Abstand d₀ zwischen zwei benachbarten Elementen, d.h. zwischen Empfangseinrichtungen 204, 206, zwischen Sendeeinrichtungen 202, 205 und/oder Sende-/Empfangseinrichtungen 207, beträgt im Wesentlichen eine Wellenlänge oder d₀ = λ. Ausgehend von dem Bezugspunkt 401 auf der Bezugslinie 400 befinden sich die ersten beiden Empfangseinrichtungen 205 symmetrisch zu der Bezugslinie 400 und sind an den Positionen bei d₀/2 und -d₀/2 und/oder bei λ/2 und -λ/2 angeordnet. Das Rastermaß beträgt d₀/2 oder λ/2, jedoch sind nicht alle Rasterpositionen mit Elementen 202, 204,205, 206, 207 besetzt. Die Bezugslinie 400 ist eine Symmetrieachse 400 für die Antennenvorrichtung 201. Die nächsten beiden Empfangseinrichtungen 205 befinden sich bei 3d₀/2 und -3d₀/2. Die nächsten beiden Empfangseinrichtungen befinden sich bei 5d₀/2 und bei -5d₀/2 und die äußersten Empfangseinrichtungen 205 befinden sich bei 7d₀/2 und -7d₀/2. Somit weisen benachbarte Empfangselemente 205 den regelmäßigen Abstand d₀ oder λ auf.

Bei dem Übergang von den Empfangseinrichtungen 205 zu den Sende-/Empfangseinrichtungen 207 weisen benachbarte Elemente ebenfalls den Abstand d₀ auf. Es finden sich Sende-/Empfangseinrichtungen 207 an den vorgebbaren Positionen 9d₀/2 und -9d₀/2 oder 9λ/2 und -9λ/2. Die äußersten Sende-/Empfangseinrichtungen 207 befinden sich an den vorgebbaren Positionen 12d₀/2 und -12d₀/2 bzw. 12λ/2 und -12λ/2 und weichen damit von den regelmäßigen Abständen ab.

Das zweidimensionale physikalische Array 203 aus Fig. 3 weist einen entsprechenden regelmäßigen Aufbau auf, wobei dieses sich in x-Richtung an der Bezugslinie 250 orientiert und in y-Richtung an der Bezugslinie 251, wodurch sich ein Bezugspunkt 252 im Schwerpunkt der Fläche des Antennenarrays 203 ergeben kann.

Es ist der Fig. 3 und Fig. 4 zu entnehmen, dass jeweils in den Bezugspunkten 401, 252 keine physikalische Sendeeinrichtung 202, 204, keine physikalische Empfangseinrichtung 205, 206 und keine physikalische Sende-/Empfangseinrichtung 207 angeordnet ist. Die Fig. 4 weist somit ein lineares Antennenarray mit acht Empfangseinrichtungen 205 und mit vier Sende-/Empfangseinrichtungen 207 auf. Die Sende-/Empfangseinrichtungen 207 können so angesteuert werden, dass sie sowohl als Sendeeinrichtung 202, 204 als auch als Empfangseinrichtung 205, 206 benutzt werden können.

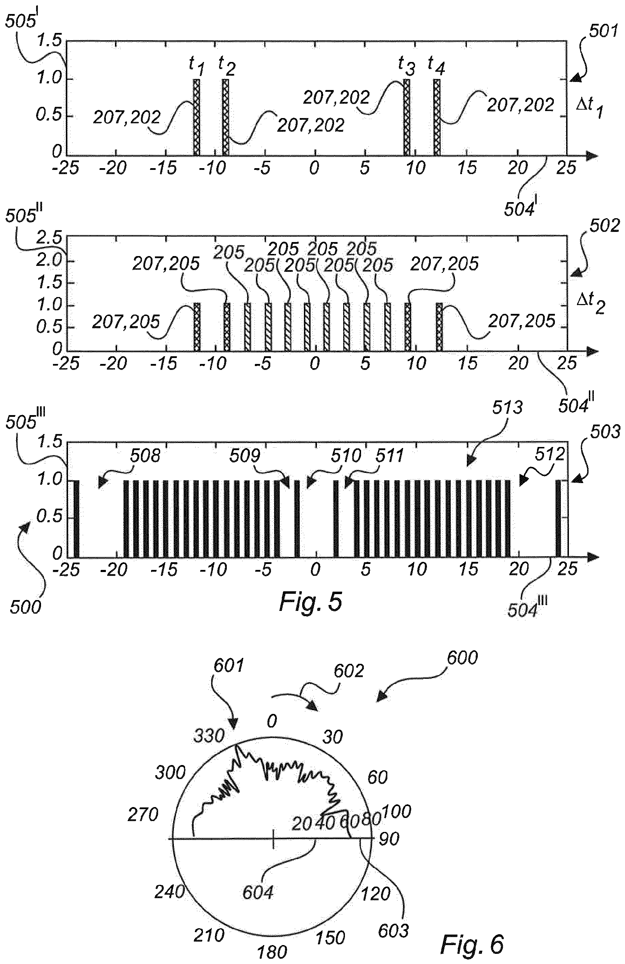

Fig. 5 zeigt einen Auszug eines Simulationsprogramms 500, das die unterschiedlichen Phasen eines Zeitmultiplexverfahrens angibt, das auf die Antennenvorrichtung 201 aus Fig. 4 angewendet wird, zum besseren Verständnis der vorliegenden Erfindung. Die Fig. 5 zeigt dabei sowohl die Phase Δt1 der Ansteuerung von Sendeeinrichtungen 202, 207 mittels einer Steuereinrichtung 111, als auch die Phase Δt2 des Empfangs und/oder der Auswertung mittels einer Auswerteeinrichtung 123. In der Empfangsphase Δt2, die im Diagramm 502 dargestellt ist, sind die Empfangseinrichtungen 205, die Empfangspatche 205 aktiviert oder die Sende-/Empfangseinrichtungen 207 in einem Empfangsmodus geschaltet. Es ist zu beachten, dass die Diagramme 501,502, 503 mehrere Zeitpunkte t1, t2, t3, t4 eines ersten Zeitschemas eines Messzyklus aufweisen. Zu jedem Zeitpunkt t1, t2, t3, t4 ist eine andere Sendeeinrichtung 202, 207 aktiviert. Die Zeitpunkte innerhalb des ersten Zeitschemas sind so aneinander angepasst, dass eine Aktivierung von unterschiedlichen Sendeeinrichtungen 202, 207 nicht gleichzeitig auftritt, da die einzelnen Sendeeinrichtungen 202, 207 im Wesentlichen hintereinander betrieben werden. Statt vier Sendeeinrichtungen 202, 207, wie in Fig. 5 dargestellt, können auch zumindest zwei Sendeeinrichtungen 202, 207 genutzt werden. Die jeweiligen Zeitpunkte des Sendediagramms 501, Δt1 und des Empfangsdiagramms 502, Δt2 liegen zeitlich in einem Abstand auseinander, der etwa der doppelten Signallaufzeit entspricht, da das im Sendediagramm 501 dargestellte Sendesignal zunächst in die Richtung des Messobjekts 104 ausgesandt wird und von dem Messobjekt 104 reflektiert wird, bevor es von einer der Empfangseinrichtungen 205, 207 empfangen wird. Zur Vereinfachung kann angenommen werden, dass die Signale des Sendediagramms 501 und des Empfangsdiagramms im Wesentlichen gleichzeitig vorhanden sind.

Die Fig. 5 zeigt mit dem Co-Array Diagramm 503, wie mittels der Ansteuerung und Auswertung der Sendeeinrichtungen 202 und Empfangseinrichtungen 205 und der Sende-/Empfangseinrichtungen 207 ein virtuelles Array 513 oder ein Co-Array 513 gebildet wird.

In den Diagrammen 501, 502, 503 sind die Abszissen 504', 504", 504'" als Ortsachsen geeicht und geben somit die Positionen der jeweiligen Empfangseinrichtung 205 oder Sende-/Empfangseinrichtung 207 an. Dabei ist die Maßeinheit für die Sendeposition 504' und für die Empfangsposition 504" sowie für die Position des virtuellen Arrays oder Co-Arrays 504'" in λ/2 geeicht oder auf diese Größe normiert. Die Ordinaten der Diagramme 501, 502, 503 geben gewichtete Signalleistungen der Sendesignale 505', der Empfangssignale 505" und der Co-Array-Signale 505'" an.

Obwohl in Fig. 5 in den Diagrammen 501, 502, 503 eine gewichtete Sendeleistung 505', 505", 505'" der Sende-/Empfangseinrichtungen 207 und Empfangseinrichtungen 205 dargestellt ist, können diese Leistungen stellvertretend für die tatsächlich vorhandenen physikalischen Sendeeinrichtungen 202, Empfangseinrichtungen 205 oder Sende-/Empfangseinrichtungen 207 gesehen werden. Folglich können die in den Diagrammen 501, 502, 503 dargestellten Balken auch als Sendeelemente 202, Empfangselemente 205 und/oder Sende-/Empfangselemente bezeichnet werden. Die Positionen stimmen mit den Positionen der in Fig. 4 entsprechend dargestellten Elementen 202, 205, 207 der Linearantenne überein. In Fig. 5 ist jedoch die zeitliche Ansteuerung und zeitliche Auswertung der zugehörigen physikalischen Elemente dargestellt. Im Folgenden mag für die Bezeichnung der zeitlichen Leistungsverläufe in den Diagrammen 501, 502, 503 die gleiche Bezeichnung gewählt werden, wie für die Anordnung von Sendeeinrichtungen 202, von Empfangseinrichtungen 205 und Sende-/Empfangseinrichtungen 207 der entsprechenden Elemente aus Fig. 4. Folglich kann auch das Zeit- und Intensitätsdiagramm 501, 502, 503 als Antennenanordnung oder als Antennengruppe bezeichnet werden.

In dem Sendediagramm 501 ist die Anordnung von Sende-/Empfangseinrichtungen 207 einer Antennenvorrichtung 201 dargestellt. Die Sende-/Empfangseinrichtungen 207 werden zu den in dem Diagramm 501 dargestellten Zeitpunkten t1, t2, t3 und t4 als Sendeeinrichtungen 202 angesteuert. Die vier Sendeeinrichtungen 202 werden in einem Zeitmultiplexverfahren sequenziell oder nacheinander aktiviert. In diesem Zeitmultiplexverfahren ist für jede Sendeeinrichtung 202 oder für jedes Sendeelement 202 vorgesehen, nach seinem eigenen Zeitschema zu unterschiedlichen Zeitpunkten t1, t2, t3, t4 innerhalb des ersten Zeitschamas aktiv zu werden. In Fig. 5 ist in den Diagrammen 501, 502, 503 ein gesamter Messzyklus des Zeitmultiplexverfahrens dargestellt, ohne die einzelnen Ansteuerungen während der unterschiedlichen Zeitpunkte t1, t2, t3, t4 in der Sendephase Δt1 und in der Empfangsphase Δt2 detailliert zu zeigen.

Um zu dem in den Simulationsdiagrammen 500 dargestellten Verlauf zu gelangen, sieht die zeitliche Abfolge vor, zum Zeitpunkt t1 innerhalb des ersten Zeitschemas die Sende-/Empfangseinrichtung 207 an der Position -12λ/2 zum Senden anzuregen. Zu diesem Zeitpunkt t1 werden gleichzeitig sowohl alle Empfangseinrichtungen 205 als auch die Sende-/Empfangseinrichtung 207 an der gerade aktiven Sendeposition -12λ/2 zum Empfangen eingestellt, da die Sendeeinrichtung an dieser Position gerade zum Senden aktiviert ist. Zum Zeitpunkt t2 werden die zweite Sende-/Empfangseinrichtung 207 an der Position -9λ/2 aktiviert. Wegen ihrer Aktivierung wird die zweite Sende-/Empfangseinrichtung 207 an der Position -9λ/2 ebenfalls zusammen mit den Empfangseinrichtungen aus dem Empfangsdiagramm 502 gleichzeitig empfangen. Somit ist wiederum nur die aktivierte Sende-/Empfangseinrichtung an der Position -9λ/2 zum Empfangen eingestellt, während die Sende-/Empfangseinrichtungen 207 an den Positionen -12λ/2, +9λ/2 und +12λ/2 aufgrund der Sendepause der zugehörigen Sendeeinrichtungen blockiert sind. Reine Empfangseinrichtungen empfangen immer. Während diesem Zeitpunkt t2 ordnet die Auswerteeinrichtung 123 unter Berücksichtigung des Zeitschemas die Empfangssignale der zweiten Sendeeinrichtung bei -9λ/2 zu. Danach wird die Sende-/Empfangseinrichtung 207 an der Position +9λ/2 zum Zeitpunkt t3 innerhalb des ersten Zeitschemas aktiviert und es wird gleichzeitig zum Zeitpunkt t3 zusammen mit allen Empfangseinrichtungen 205 mit der beim Senden genutzten Sende-/Empfangseinrichtung 207 bei +9λ/2 empfangen. Die Sende-/Empfangseinrichtungen bei -12λ/2, -9λ/2 und +12λ/2 sind zu dem Zeitpunkt t3 innerhalb des ersten Zeitschemas deaktiviert oder nicht in den Empfangsmodus geschaltet, da diese während t3 nicht senden. Das Signal wird zum Zeitpunkt t3 nur mit der Sende-/Empfangseinrichtung 207 an Position 9λ/2 und den reinen Empfangseinrichtungen 205 empfangen. Die zu dem Zeitpunkt t3 empfangenen Empfangssignale werden von der Auswerteeinrichtung 123 der Sendeeinrichtung bei +9λ/2 zugeordnet, die zum Senden angeregt ist. Zum Abschluss des Messzyklus wird im Zeitpunkt t4 die Sende-/Empfangseinrichtung 207 an der Position +12λ/2 zum Senden aktiviert und von ihr wird ein elektromagnetisches Signal ausgesandt, welches in der Empfangsphase Δt2 etwas versetzt nach dem Zeitpunkt t4 von den reinen Empfangseinrichtungen 205 und der in den Empfangsmodus geschalteten Sende-/Empfangseinrichtungen 207 an der Positionen +12λ/2 empfangen wird. Der Empfang des Empfangssignals erfolgt im Wesentlichen gleichzeitig, bis auf einen Phasenversatz aufgrund der unterschiedlichen lokalen Anordnung der einzelnen Elemente 205, 207. Die Sende-/Empfangseinrichtungen an den Positionen -12λ/2, -9λ/2 und 9λ/2 sind zum Zeitpunkt t4 deaktiviert, da sie sich zum Zeitpunkt t4 in einer Sendepause befinden.

Zum Abschluss eines Messzyklus, also nach dem Senden zum Zeitpunkt t4, kann durch das Nutzen von Verfahren für das Bilden von Co-Arrays ein Co-Array ermittelt werden. Es zeigt sich, dass dieses Co-Array 513 von der Position -24λ/2 bis zur Position 24λ/2 reicht und im Wesentlichen gleichmäßig und kammförmig aufgebaut ist. Lediglich im Bereich 508 von - 23λ/2 bis -20λ/2, im Bereich 509 bei -3λ/2, im Bereich 510 von -1λ/2 bis 1λ/2, im Bereich 511 bei 3λ/2 und im Bereich 512 von 20λ/2 bis 23λ/2 weist das virtuelle Array 513 oder das Co-Array 513 Lücken auf. Das virtuelle Array 513 kann als die Empfangseigenschaft des physikalischen Arrays 201 verstanden werden, welche einem physikalischen Array mit der entsprechenden Ausdehnung von -24A/2 bis 24λ/2 und den entsprechenden Lücken entspricht. Die Ausdehnung des Arrays 513 wird lediglich durch die Art der Ansteuerung und Auswertung der einzelnen Elemente 207, 205, 202 erreicht.

Es ist im Co-Array Diagramm 503 zu erkennen, dass sich gegenüber der in dem Sendediagramm 501 und Empfangsdiagramm 502 dargestellten physikalischen tatsächlichen Ausdehnung des physikalischen Arrays 201 mit den Elementen 202, 205, 207, welche von - 12λ/2 bis +12λ/2 reicht, für das virtuelle Array 513 eine vergrößerte Ausdehnung oder eine vergrößerte Apertur von -24λ/2 bis 24λ/2 ergibt. Bei der Rechenoperation, die zum Erstellen des virtuellen Arrays 513 angewendet wird, handelt es sich beispielsweise um eine Faltungsoperation der im Empfangsdiagramm 502 dargestellten Empfangpositionen mit den jeweiligen im Sendediagramm 501 dargestellten Sendepositionen 207, die zu dem entsprechenden Zeitpunkt t1, t2, t3, t4 des zugehörigen Zeitschemas aktiviert sind. Das zu dem virtuellen Array 513 zugehörende Antennendiagramm 600 weist aufgrund der breiten Apertur des virtuellen Arrays 513 eine gute Fokussierung in der Hauptstrahlrichtung 601 auf. Bis auf die Lücken ist das Abstandskriterium erfüllt. Jedoch entstehen aufgrund der Lücken 508, 509, 510, 511, 512, welche größer als λ/2 sind, in anderen Richtungen als der Hauptstrahlrichtung oder der Hauptempfangsrichtung starke Störungen, wie dem Antennendiagramm 600 zu entnehmen ist. Hauptsächlich führen die Aperturlücken 509, 510, 511, die im mittleren Bereich des virtuellen Arrays 513 auftreten, zu einem schlechten Nebenkeulenabstand, wie in dem Antennendiagramm in Fig. 6 dargestellt ist. Die Fig. 6 zeigt ein Antennendiagramm 600 oder eine Antennencharakteristik 600 für die synthetisch durch Verfahren der digitalen Strahlformung errechnete Echokurve der Hauptempfangsrichtung -20° 601 für das in Fig. 5 dargestellte virtuelle Array 513 zum besseren Verständnis der vorliegenden Erfindung. Solche Antennendiagramme können für alle interessierende Hauptempfangsrichtungen bestimmt werden.

Die von einer Auswerteeinrichtung 123 und in einer Speichereinrichtung zwischengespeicherten Echokurven können in einem Prozessor des Füllstandmessgeräts 105 unter Nutzung von Verfahren zur Bildung eines virtuellen Arrays zu einem virtuellen Array oder einem Co-Array 513 angeordnet werden. Auf die Echokurven dieses virtuellen Arrays können dann Verfahren zur digitalen Strahlformung angewendet werden. Die in der Mitte um den Nullpunkt angeordnete oder entstehende Lücke 512 des Co-Arrays kann jedoch nur eine geringe Side-Lobe-Unterdrückung erreichen, wie in der Antennencharakteristik Fig. 6 zu sehen ist, weshalb ein hoher Störanteil außerhalb der Hauptstrahlrichtung 601 vorhanden ist.

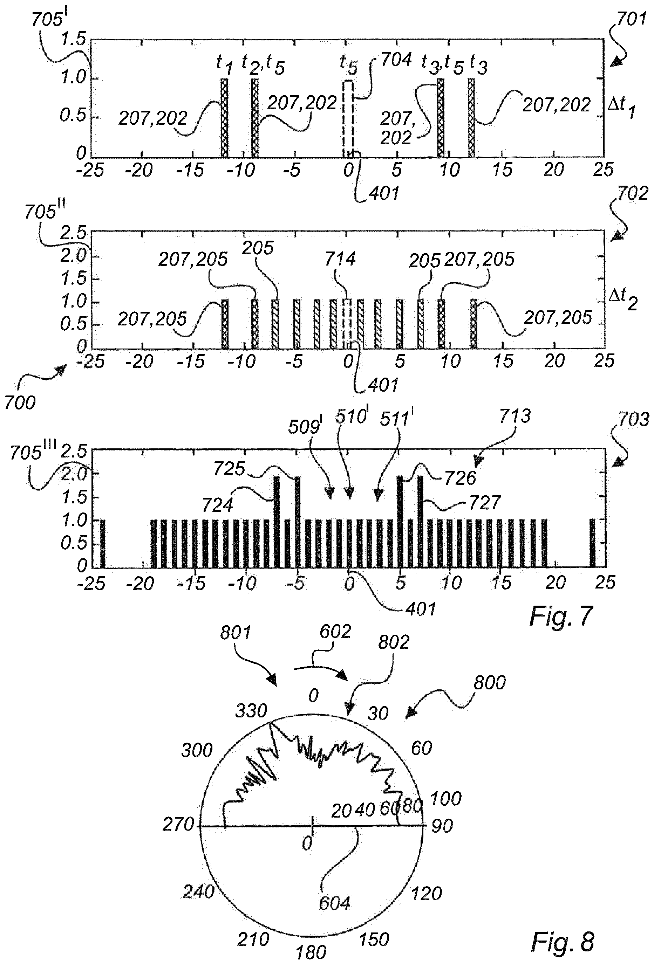

Fig. 7 zeigt Simulationsdiagramme 700 zum Darstellen eines Zeitmultiplexverfahrens zum Ansteuern der in Fig. 4 dargestellten Antennenanordnung 201, um die Emulation einer zusätzlichen Antenne zu erreichen, gemäß einem exemplarischen Ausführungsbeispiel der vorliegenden Erfindung. Im Wesentlichen ist die Beschreibung zu Fig. 5 auch auf Fig. 7 anwendbar. Zusätzlich zu dem in Fig. 5 dargestellten Zeitablauf t1, t2, t3, t4 wird der Messzyklus, der durch das in Fig. 7 dargestellte Zeitschema gebildet wird, durch ein zusätzliches Zeitschema erweitert. Das zusätzliche Zeitschema ist vorgesehen, um eine Untergruppe der Sende-/Empfangseinrichtungen 207 und/oder eine Untergruppe von Sendeeinrichtungen 202 oder eine Kombination von Sende-/Empfangseinrichtungen 207 und Sendeeinrichtungen 202 gleichzeitig zum Senden anzuregen. Es wird also ein Zeitpunkt vorgesehen, zu dem zumindest zwei Sendeeinrichtungen gemeinsam zum Senden angeregt werden. Zum Zeitpunkt t1 wird, wie in dem Sendediagramm 701 dargestellt ist, die Sendeeinrichtung 202 oder die Sende-/Empfangseinrichtung 207, welche an der Position bei - 12λ/2 angeordnet ist, innerhalb eines ersten Zeitschemas zum Senden aktiviert. Mit den in dem Empfangsdiagramm 702 dargestellten Empfangselementen 205 und mit den auf Empfang eingestellten Sende-/Empfangseinrichtungen 207 wird das Reflexionssignal, verschoben um die Signallaufzeit, im Wesentlichen gleichzeitig mit dem Senden empfangen, wie bereits in Fig. 5 beschrieben wurde. Die einzelnen Unterschiede der Empfangszeitpunkte der einzelnen Sende-/Empfangseinrichtungen, ergeben sich aufgrund der unterschiedlichen Positionen und der damit verbundenen Signallaufzeitunterschiede. Aus diesen Unterschieden können die Echokurven für die verschiedenen Raumrichtungen der Empfangssignale ermittelt werden. Im Wesentlichen werden die Empfangssignale jedoch gleichzeitig im Empfangsintervall Δt2 empfangen.

Nach dem Durchlauf des ersten Zeitschemas t1, t2, t3, t4, in dem die Sendeeinrichtungen abwechselnd zum Senden angeregt werden, schließt sich ein zweites Zeitschema an. Zum Zeitpunkt t5 des zweiten Zeitschemas wird eine Untergruppe der Sende-/Empfangseinrichtungen 207 gleichzeitig zum Senden aktiviert. Bei diesen Elementen 207 handelt es sich bei dem in Fig. 7 dargestellten Beispiel um die zwei Sende-/Empfangseinrichtungen 207, die sich an den Positionen -9λ/2 und 9λ/2 befinden. Diese zwei Sende-/Empfangseinrichtungen sind eine Untergruppe der vier vorhandenen Sende-/Empfangseinrichtungen 207. Im Wesentlichen zu dem Zeitpunkt t5 werden nach Berücksichtigung einer Laufzeit wiederum mit allen Empfangseinrichtungen 205 und mit den Sende-/Empfangseinrichtungen 207, welche gerade senden, Echokurven erfasst. In dem Empfangsdiagramm 702, Δt2 wird somit zusätzlich zu den Empfangseinrichtungen 205 auch mit den Sende-/Empfangseinrichtungen 207 an den Positionen -9λ/2 und 9λ/2 empfangen. Aufgrund des gleichen Abstands von 9λ/2 der gleichzeitig aktivierten Sende-/Empfangseinrichtungen 207, 202 an den Positionen -9λ/2 und 9λ/2 entsteht genau in dem Bezugspunkt 401 eine emulierte Antenne 704 oder eine simulierte Sendeeinrichtung 704. Die zusätzlichen Echokurven, die durch die gleichzeitige Aktivierung der Sende-/Empfangseinrichtungen 207 zum Zeitpunkt t5 erzeugt werden, stimmen im Wesentlichen mit den Echokurven überein, welche erfasst werden würden, wenn eine zusätzliche physikalische Sendeantenne 704 an der Position 0, 401 der Antennenvorrichtung hinzugefügt würde.

Da auch die Sende-/Empfangseinrichtungen 207 an den Positionen -9λ/2 und 9λ/2 während des Zeitpunkts t5 empfangen, entsteht eine zusätzliche virtuelle Sende-/Empfangseinrichtung 714 oder eine emulierte Sende-/Empfangseinrichtung 714, mit der empfangen werden kann. Die virtuelle Empfangseinrichtung 714 entsteht, da mit dem Aktivieren der Sende-/Empfangseinrichtungen 207 im Zeitpunkt t5 an den Positionen -9λ/2 und 9λ/2, welche symmetrisch zu der Position 0 angeordnet sind, die beiden Sende-/Empfangseinrichtungen an den Positionen -9λ/2 und 9λ/2 auch in den Empfangsmodus geschaltet sind.

Wie die Berechnung des virtuellen Arrays 713 im Diagramm 703 zeigt, werden zusätzlich zu der Verbreiterung der virtuellen Ausdehnung des virtuellen Arrays 713, die von den Positionen -24λ bis 24λ reicht, die Lücken 509', 510', 511' in der Mitte des Co-Arrays 713 geschlossen. Jedoch werden durch die zusätzlich ermittelten Echokurven, die zum Zeitpunkt t5 in den zumindest zwei aktiven Sende-/Empfangseinrichtungen 207, 202 an den Positionen -9λ/2 und +9λ/2 hervorgerufen werden, Mehrfachbelegungen 724, 725, 726, 727 an einigen Positionen im virtuellen Co-Array generiert. Diese Mehrfachbelegungen 724, 725, 726, 727 sind im Co-Array Diagramm 703 mit einer Gewichtung von 2 dargestellt. Das Co-Array-Diagramm 703 zeigt das berechnete virtuelle Array 713. Das bedeutet, dass aufgrund des zur Berechnung des virtuellen Co-Arrays 713 angewendeten Verfahrens, welches zumindest eine Faltung aufweist, eine Gewichtung der Empfangssignalamplituden größer 1 an den Positionen -7λ/2, -5λ/2, 5λ/2 und 7λ/2 entsteht.

Fig. 8 zeigt ein Antennendiagramm 800, welches sich zu der Antennenvorrichtung 201 aus Fig. 4 ergibt, wenn in einem Zeitmultiplexverfahren eine zusätzliche Aktivierung von zumindest zwei Sendeeinrichtungen 202, 207 gemeinsam stattfindet. Es ist auch in diesem Antennendiagramm 800 wieder die Hauptkeule 801 zu erkennen. Die Hauptkeule 801 ist in einer Hauptempfangsrichtung von -20 Grad gerichtet. Im Umkreis der Hauptkeule 801, insbesondere in der Polarrichtung 602 sind deutlich weniger ausgeprägte Nebenkeulen 802 ausgebildet als in Fig. 6.

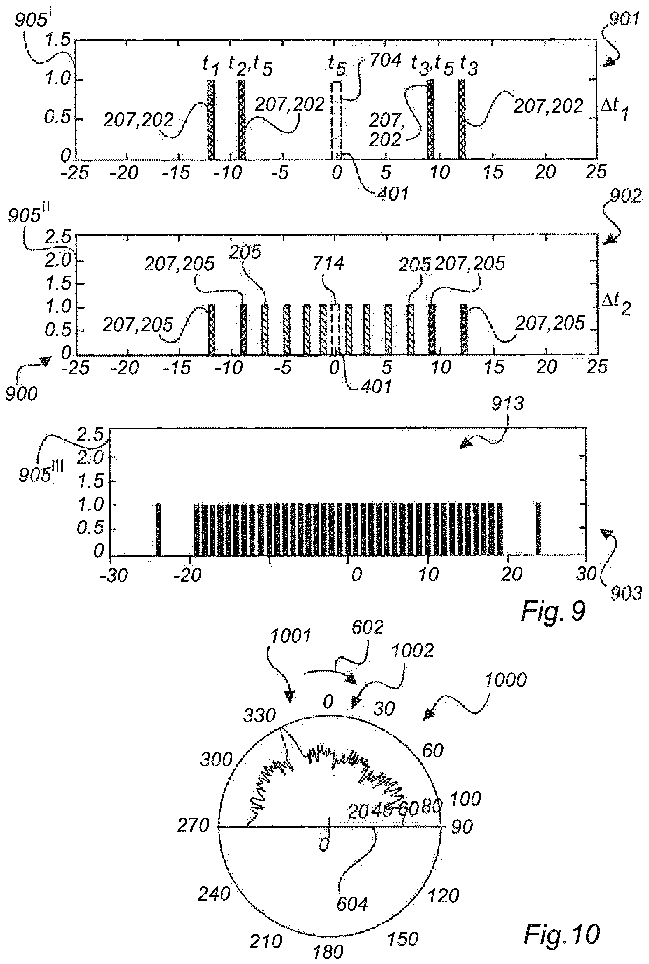

Fig. 9 zeigt ein Zeitmultiplexverfahren mit Vorkorrektur einer Co-Array-Gewichtung gemäß einem exemplarischen Ausführungsbeispiel der vorliegenden Erfindung. Die Fig. 9 zeigt wie die Fig. 7 Diagramme 900 aus den unterschiedlichen Phasen der Berechnung eines Co-Arrays 913 mittels verschiedener Simulationsergebnisse 901, 902,903. Dabei sind zu einer Sendezeit Δt2 das Sendediagramm 901, zu einer Empfangszeit Δt2 das Empfangsdiagramm 902 und ein berechnetes Co-Array 913 in dem Co-Array Diagramm 903 gezeigt. Das erste Zeitschema eines Multiplexverfahrens weist die Zeitpunkte t1, t2, t3, t4 auf und ein zweites Zeitschema weist den Zeitpunkt t5 auf. Das erste und zweite Zeitschema wird auf der Senderseite 901, Δt1 angewandt. Die jeweiligen Sendesignale beeinflussen das Empfangsverhalten auf der Empfangsseite 902, Δt2 zu entsprechenden um die Laufzeit verzögerten Zeitpunkten.

Das Sendediagramm 901 entspricht dem Sendediagramm 701 und das Empfangsdiagramm 902 entspricht dem Empfangsdiagramm 702. Die Skalierungen 905' und 905" entsprechen den Skalierungen 705' und 705" und geben eine Gewichtung der Sende- und Empfangssignale an. Wie in Fig. 7 wird zum Zeitpunkt t5 eine zusätzliche virtuelle Sendeeinrichtung 704 und virtuelle Empfangseinrichtung 714 geschaffen. Durch Mittelwertbildung oder durch das gezielte Auswählen einer Echokurve der jeweiligen Position kann ein gleichmäßiges Co-Array 913 geschaffen werden. Ein gleichmäßiges Co-Array 913 bedeutet, dass im Wesentlichen sämtliche Positionen des Co-Arrays 913 eine Gewichtung des Faktors 1 aufweisen, wie die Skalierung 905'" zeigt, die der Skalierung 705'" entspricht. Zusätzlich zu der Mittelwertbildung oder durch eine gezielte Auswahl einer Echokurve kann auf das erzeugte Co-Array 913 ein Tapering-Verfahren angewendet werden, zum Beispiel Hamming, Tylor oder Blackman. Hierzu werden die Echokurven, die mit den im Diagramm 905" dargestellten Empfangseinrichtungen 205 oder Sende-/Empfangseinrichtungen 207 empfangen werden, und die Echokurven, die mit der virtuellen Empfangseinrichtung 714 empfangen werden, und welche in der Darstellung der Co-Array-Belegung 713 eine Gewichtung größer 1 aufweisen, jedoch der gleichen Co-Array-Position zugeordnet werden können, einer Mittelwertbildung unterzogen. Es ergibt sich hieraus eine gleichmäßige Co-Array-Belegung, welche in der Darstellung 903 visualisiert ist. Anschließend an diesen Schritt kann ein Tapering vorgesehen sein, bei dem die Echokurven des virtuellen Arrays abhängig von ihrer virtuellen Position mit einer Fensterfunktion gewichtet werden. Das Tapering wird ergänzend zur digitalen Strahlformung benutzt. Zudem ist es möglich zu einem beliebigen Zeitpunkt eine Vielzahl von Sendeelementen 207, 202 oder alle Sendeelemente 207, 202 gleichzeitig zu aktivieren, um die in Richtung des Füllguts abgestrahlte Radarenergie zu erhöhen. Mittels der gleichzeitigen Aktivierung der Sendeeinrichtungen 202, 207 kann auch bei schlecht reflektierenden Medien oder bei ungünstigen Schüttgutlagen eine sichere Erfassung von Echosignalen erreicht werden und somit eine Plausibilisierung der Topologiemessung erfolgen. Eine detaillierte Auswertung des Verlaufs der Oberfläche und eine Bildung von virtuellen Arrays ist jedoch nur in einem begrenzten Umfang möglich, da nur ein begrenzter Teil der Oberfläche des Schüttguts mit der erhöhten Sendeenergie bestrahlt werden kann.

Die Plausibilitätsmessung kann eine reine Abstandsmessung oder reine Füllstandmessung in einer einzigen Raumrichtung sein, beispielsweise senkrecht zur Füllgutoberfläche. Die Plausibilitätsmessung kann beispielsweise nach jedem Messzyklus, der die Zeiten t1, t2, t3, t4 und t5 aufweist, als ein weiteres zusätzliches Zeitschema zu einem Zeitpunkt t6 durchgeführt werden. In einem anderen Beispiel kann die Plausibilitätsprüfung nach einer vorgebbaren Anzahl von durchgeführten Messzyklen als Korrektur und Plausibilitätsmessung eingefügt werden. In einem noch anderen Beispiel kann die Plausibilitätsprüfung durchgeführt werden, wenn ein Qualitätsmaß unterschritten wird. Bei sämtlichen Zeitschemata kann es sich um periodische Signalverläufe handeln, die parallel zueinander ablaufen. Unterscheiden sich die Ergebnisse einer Füllstandmessung mittels der Topologiemessung unter Zuhilfenahme eines Zeitmultiplexverfahrens und dem zusätzlichen Aktivieren von zumindest zwei Sendeeinrichtungen und die Ergebnisse, die bei der normalen Schüttgutmessung mit der gleichzeitigen Aktivierung der Sendeeinrichtungen gewonnen werden, über eine vorab definierte Toleranzschwelle hinaus, kann das Topologiemessgerät 105 eine Warnmeldung erzeugen und auf einen reinen Füllstandmessbetrieb umschalten. Beim Umschalten zu einem reinen Füllstandmessbetrieb mag das Auswerte- und Ansteuerverfahren der Antennenvorrichtung 201 geändert werden.

Fig. 10 zeigt eine Antennencharakteristik 1000, welche mit dem virtuellen Array 913 erzeugt werden kann, gemäß einem exemplarischen Ausführungsbeispiel der vorliegenden Erfindung. Die Antennencharakteristik 1000 zeigt eine gute Fokussierung in der Hauptstrahlrichtung 1001 oder Hauptempfangsrichtung 1001 bei -20° und eine geringe Ausdehnung der Nebenkeulen 1002 in der Polarrichtung 602. Aufgrund der guten Fokussierung und der geringen Störung kann eine gute Bestimmung der Schüttgutoberfläche und somit eine gute Berechnung der Topologie des Schüttguts erfolgen, wodurch sich wieder eine gute Füllstandmessung erreichen lässt.

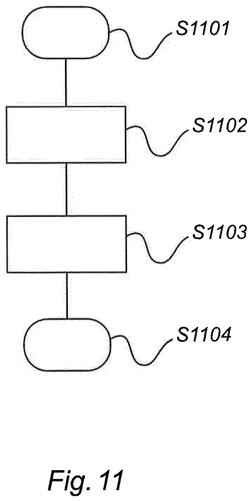

Fig. 11 zeigt ein Flussdiagramm für ein Verfahren zum Betreiben einer Antennenvorrichtung aus Fig. 4 gemäß einem exemplarischen Ausführungsbeispiel der vorliegenden Erfindung. Das Verfahren beginnt in Schritt S1101 und führt in Schritt S1102 das Anregen von zumindest zwei Sendeeinrichtungen in abwechselnder Art und Weise derart aus, dass jede der zumindest zwei Empfangseinrichtungen 205, 207 ein von jeder der zumindest zwei Sendeeinrichtungen 207, 202 erzeugtes Sendesignal empfängt. Die abwechselnde Anregung oder sequenzielle Anregung entspricht den in den Figuren Fig. 5, Fig.7 und Fig. 9 dargestellten Zeitpunkten t1, t2, t3 und t4 der Sendediagramme 501, 701, 901. In dem Schritt S1103 wird zu einem Zeitpunkt t5 eine Untergruppe der vorhandenen Sendeeinrichtungen 207, 202, beispielsweise die zumindest zwei Sendeeinrichtungen 207, 202 an den Positionen 9λ/2 und +9λ/2, gleichzeitig und gleichförmig zum Senden angeregt. Das gleichförmige Anregen bewirkt, dass jede der Empfangseinrichtungen 207, 205 an unterschiedlichen Position, wie beispielsweise in den Diagrammen 505", 702 und 905" dargestellt ist, das zusätzliche Signal dieser zum Zeitpunkt t5 entstehenden virtuellen Sendeeinrichtung 704 empfängt. Außerdem empfängt eine entstehende virtuelle Empfangseinrichtung 714 zusätzliche Empfangssignale, die zur Bestimmung eines virtuellen Arrays 913 genutzt werden können. Die Position der virtuellen Sendeeinrichtung 704 entsteht an einer vorgebbaren Position 401, beispielsweise in der Mitte 401 einer Antennenvorrichtung 201.

Nach dem Durchlaufen eines Messzyklus mit den Zeitpunkten t1 bis t5 endet das Verfahren in dem Zustand S1104.

Ergänzend sei darauf hinzuweisen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Ein Füllstandmessgerät (105) zum Bestimmen eines Füllstandes und/oder zum Bestimmen einer Oberflächenstruktur (120) eines Objekts (104) mit einer Antennenvorrichtung (201, 203), die Antennenvorrichtung aufweisend:
eine Steuereinrichtung (111);
eine Antennengruppe aufweisend:
zumindest zwei Sendeeinrichtungen (202, 207) an vorgebbaren Positionen;
zumindest zwei Empfangseinrichtungen (205, 207) an vorgebbaren Positionen;
wobei die Steuereinrichtung (111) derart eingerichtet ist, die zumindest zwei Sendeeinrichtungen (202, 207) abwechselnd (t1, t2, t3, t4) einzeln zum Senden anzuregen, sodass jede der zumindest zwei Empfangseinrichtungen (205, 207) ein von jeder der zumindest zwei Sendeeinrichtungen erzeugtes und ausgesendetes Sendesignal empfängt; und
wobei die Steuereinrichtung (111) weiter eingerichtet ist, zu einem vorgebbaren Zeitpunkt (t5) die zumindest zwei Sendeeinrichtungen gemeinsam zum Senden jeweils eines Sendesignals anzuregen, wobei die Sendesignale zueinander kohärent sind, sodass aufgrund einer Signalüberlagerung der von den zumindest zwei Sendeeinrichtungen ausgesendeten Sendesignalen jede der zumindest zwei Empfangseinrichtungen ein von einer einzigen virtuellen Sendeeinrichtung (704) erzeugtes Sendesignal empfängt;
wobei die virtuelle Sendeeinrichtung (704) an einer vorgebbaren Position (401) angeordnet ist, die sich von den vorgebbaren Positionen der zumindest zwei Sendeeinrichtungen (205, 207) unterscheidet.

2. Füllstandmessgerät nach Anspruch 1, weiter aufweisend:
- eine Auswerteeinrichtung (123);
wobei die Steuereinrichtung (111) weiter eingerichtet ist, dass sie den vorgebbaren Zeitpunkt (t5) durch das Anwenden von zumindest zwei unterschiedlichen Zeitschemata bestimmt;
wobei Steuereinrichtung weiter eingerichtet ist, die zumindest zwei Sendeeinrichtungen (202, 207) nach einem vorgebbaren ersten Zeitschema (t1, t2, t3, t4) derart abwechselnd zum Senden anzuregen, dass die von den zumindest zwei Sendeeinrichtungen (202, 207) erzeugten Sendesignale beim Empfangen mit den zumindest zwei Empfangseinrichtungen (205, 207) jeweils einer der zumindest zwei Sendeeinrichtungen (202, 207) zuordenbar sind;
wobei die Steuereinrichtung (111) weiter eingerichtet ist, die zumindest zwei Sendeeinrichtungen (202, 207) nach einem vorgebbaren zweiten Zeitschema (t5) derart gemeinsam zum Senden anzuregen, dass die von den zumindest zwei Sendeeinrichtungen (202, 207) erzeugten Sendesignale beim Empfangen mit den zumindest zwei Empfangseinrichtungen (205, 207) in einer vorgebbaren Entfernung von den Sendeeinrichtungen (202, 207) als von einer einzigen virtuellen Sendeeinrichtung (704) stammend erscheinen;
wobei die Auswerteeinrichtung (123) eingerichtet ist, während das vorgebbare erste Zeitschema (t1, t2, t3, t4) aktiv ist und während das vorgebbare zweite Zeitschema (t5) aktiv ist, Empfangssignale über die zumindest zwei Empfangseinrichtungen (205, 207) zu empfangen; und
wobei die Auswerteeinrichtung (123) eingerichtet ist, aus den vorgebbaren Positionen der Sendeeinrichtungen (202, 207) und/oder aus den vorgebbaren Positionen der Empfangseinrichtungen (205, 207) unter Verwendung der während dem ersten Zeitschema (t1, t2, t3, t4) und während dem zweiten Zeitschema (t5) empfangenen Empfangssignale eine Echokurve für eine vorgebbare Raumrichtung zu bilden.

3. Füllstandmessgerät nach Anspruch 1 oder 2, wobei die vorgebbaren Positionen von benachbarten Sendeeinrichtungen (202, 207) und/oder Empfangseinrichtungen (205, 207) in einem Abstand (d₀) angeordnet sind, der kleiner oder gleich der halben Wellenlänge der verwendeten Signale ist.

4. Füllstandmessgerät nach einem der Ansprüche 1 bis 3, wobei die Auswerteeinrichtung (123) eingerichtet ist, durch einen zeitlich abwechselnden Betrieb der Sendeeinrichtungen und einer entsprechenden Auswertung der Empfangssignale aus der Antennengruppe (202, 205, 207) ein virtuelles Array (713, 913) zu bilden.

5. Füllstandmessgerät nach einem der Ansprüche 1 bis 4, wobei die zumindest zwei Sendeeinrichtungen (202, 207) in Bezug auf einen Bezugspunkt (401, 252) angeordnet sind; und
wobei die virtuelle Sendeeinrichtung (704) als in dem Bezugspunkt (401, 252) positioniert erscheint.

6. Füllstandmessgerät nach einem der Ansprüche 1 bis 5, wobei die von den zumindest zwei Sendeeinrichtungen (202, 207) erzeugten Sendesignale durch Anwenden eines Zeitmultiplexverfahrens und/oder eines Codierverfahrens jeweils einer der zumindest zwei Sendeeinrichtungen zuordenbar ist.

7. Füllstandmessgerät nach einem der Ansprüche 1 bis 6, wobei die Steuereinrichtung (111) eingerichtet ist, die zumindest zwei Sendeeinrichtungen (202, 207) mit einem Frequenz Modulierten Dauerstrich Signal zum Senden anzuregen.

8. Füllstandmessgerät nach einem der Ansprüche 1 bis 7, wobei eine der zumindest zwei Sendeeinrichtungen (202) und eine der zumindest zwei Empfangseinrichtungen (205) als eine gemeinsame Sende-/Empfangseinrichtung (207) realisiert ist, die sowohl ein Signal senden als auch ein Signal empfangen kann.

9. Füllstandmessgerät nach einem der Ansprüche 1 bis 8, wobei die Summe von Zeitdauern aus dem vorgebbaren ersten Zeitschema (t1, t2, t3, t4) und dem vorgebbaren zweiten Zeitschema (t5) die Dauer eines Messzyklus bestimmt.

10. Füllstandmessgerät nach einem der Ansprüche 1 bis 9, wobei die Auswerteeinrichtung (123) eingerichtet ist, eine Gewichtung der Empfangssignale durchzuführen; und/oder
wobei die Steuereinrichtung (111) eingerichtet ist, eine Gewichtung der Sendesignale durchzuführen.

11. Füllstandmessgerät nach einem der Ansprüche 1 bis 10, wobei die Antennenvorrichtung (201, 203) als ein Zweileitergerät ausgeführt ist, wobei eine Energieversorgungsleitung (130) auch zur Datenübertragung genutzt wird.

12. Füllstandmessgerät nach einem der Ansprüche 2 bis 11, wobei die Auswerteeinrichtung (123) eingerichtet ist, einen Füllstand, ein Volumen eines Objektes (104), eine Masse eines Objektes (104) und/oder eine Oberflächenstruktur (120) eines Objekts (104) zu ermitteln.

13. Verfahren zum Betreiben einer Antennenvorrichtung (201, 203) eines Füllstandmessgerätes (105) zum Bestimmen eines Füllstandes und/oder zum Bestimmen einer Oberflächenstruktur (120) eines Objekts (104), wobei die Antennenvorrichtung eine Antennengruppe mit zumindest zwei Sendeeinrichtungen (202, 207) an vorgebbaren Positionen und mit zumindest zwei Empfangseinrichtungen (205, 207) an vorgebbaren Positionen aufweist, das Verfahren aufweisend:
Anregen der zumindest zwei Sendeeinrichtungen in abwechselnder Art und Weise derart, dass jede der zumindest zwei Empfangseinrichtungen ein von jeder der zumindest zwei Sendeeinrichtungen erzeugtes und ausgesendetes Sendesignal empfängt; und
Anregen der zumindest zwei Sendeeinrichtungen zum gemeinsamen Senden jeweils eines Sendesignals zu einem vorgebbaren Zeitpunkt, wobei die Sendesignale zueinander kohärent sind, so dass aufgrund einer Signalüberlagerung der von den zumindest zwei Sendeeinrichtungen ausgesendeten Sendesignalen jede der zumindest zwei Empfangseinrichtungen ein von einer einzigen virtuellen Sendeeinrichtung (704) erzeugtes Sendesignal empfängt;
wobei die virtuelle Sendeeinrichtung an einer vorgebbaren Position angeordnet ist, die sich von den vorgebbaren Positionen der zumindest zwei Sendeeinrichtungen unterscheidet.

14. Programmelement zum Betreiben einer Antennenvorrichtung (201, 203) eines Füllstandmessgeräts (105) zum Bestimmen eines Füllstandes und/oder zum Bestimmen einer Oberflächenstruktur (120) eines Objekts (104), wobei die Antennenvorrichtung zumindest zwei Sendeeinrichtungen (202, 207) an vorgebbaren Positionen und zumindest zwei Empfangseinrichtungen (205, 207) an vorgebbaren Positionen aufweist,
wobei das Programmelement, wenn es von einem Prozessor einer Antennenvorrichtung ausgeführt wird, die Antennenvorrichtung anleitet, das Verfahren gemäß Anspruch 13 durchzuführen.

15. Computerlesbares Speichermedium, auf dem ein Programmcode gespeichert ist, der, wenn er von einem Prozessor ausgeführt wird, das Verfahren nach Anspruch 13 ausführt.

## Claims

1. A fill level measurement device (105) for determining a fill level and/or for determining a surface structure (120) of an object (104) with an antenna device (201, 203), the antenna device comprising:
a controller (111);
an antenna array comprising:
at least two transmission devices (202, 207) in predeterminable positions;
at least two receiving devices (205, 207) in predeterminable positions;
wherein the controller (111) is configured to alternately (t1, t2, t3, t4) individually excite the at least two transmission devices (202, 207) for transmission, such that each of the at least two receiving devices (205, 207) receives a transmission signal generated and transmitted by each of the at least two transmission devices; and
wherein the controller (111) is further configured to excite the at least two transmission devices jointly at a predeterminable moment (t5), such that each of the transmission devices transmits a transmission signal, wherein the transmission signals are coherent with respect to each other, such that, due to a superposition of the two transmission signals transmitted by the at least two transmission devices, each of the at least two receiving devices receives a transmission signal generated by a single virtual transmission device (704);
wherein the virtual transmission device (704) is arranged in a predeterminable position (401) which differs from the predeterminable positions of the at least two transmission devices (205, 207).

2. The fill level measurement device (105) according to claim 1, further comprising:
an evaluation device (123);
wherein the controller (111) is further configured to determine the predeterminable moment (t5) by applying at least two different time schemes;
wherein the controller is further configured to excite the at least two transmission devices (202, 207) alternately for transmission in accordance with a predeterminable first time scheme (t1, t2, t3, t4) in such a way that the transmission signals generated by the at least two transmission devices can each be assigned to one of the at least two transmission devices (202, 207) when received by the at least two receiving devices (205, 207);
wherein the controller (111) is further configured to excite the at least two transmission devices jointly in transmission in accordance with a predeterminable second time scheme (t5) in such a way that the transmission signals generated by the at least two transmission devices (202, 207) appear to originate from a single virtual transmission device (704) when received by the at least two receiving devices (205, 207) at a predeterminable distance from the transmission devices (202, 207);
wherein the evaluation device (123) is configured to receive receiving signals via the at least two receiving devices (205, 207) while the predeterminable first time scheme (t1, t2, t3, t4) is active and while the predeterminable second time scheme (t5) is active; and wherein the evaluation device (123) is configured to form an echo curve for a predeterminable spatial direction from the predeterminable positions of the transmission devices (202, 207) and/or from the predeterminable positions of the receiving devices (205, 207) using the receiving signals received during the first time scheme (t1, t2, t3, t4) and during the second time scheme (t5).

3. The fill level measurement device (105) according to any of claims 1 or 2, wherein the predeterminable positions of adjacent transmission devices (202, 207) and/or receiving devices (205, 207) are arranged at a distance (d₀) which is less than or equal to half the wavelength of the used signals.

4. The fill level measurement device (105) according to any of claims 1 to 3, wherein the evaluation device (123) is configured to form a virtual array (713, 913) from the antenna array (202, 205, 207) based on a timely alternate operation of the transmission devices and a corresponding evaluation of the receiving signals.

5. The fill level measurement device (105) according to any of claims 1 to 4, wherein the at least two transmission devices (202, 207) are arranged with respect to a reference point (401, 252); and
wherein the virtual transmission device (704) appears to be positioned at the reference point (401, 252).

6. The fill level measurement device (105) according to any of claims 1 to 5, wherein the transmission signals generated by the at least two transmission devices (202, 207) are each assignable to one of the at least two transmission devices (202, 207) by applying a time-multiplexing method and/or a coding method.

7. The fill level measurement device (105) according to any of claims 1 to 6, wherein the controller (111) is configured to excite the at least two transmission devices (202, 207) using a frequency-modulated continuous wave signal.

8. The fill level measurement device (105) according to any of claims 1 to 7, wherein one of the at least two transmission devices (202) and one of the at least two receiving devices (205) are formed as joint transceiver device (207) which can transmit a signal and receive a signal.

9. The fill level measurement device (105) according to any of claims 1 to 8, wherein the total of durations from the predeterminable first time scheme (t1, t2, t3, t4) and the predeterminable second time scheme (t5) determines the duration of a measurement cycle.

10. The fill level measurement device (105) according to any of claims 1 to 9, wherein the evaluation device (123) is configured to weight the receiving signals; and/or
wherein the controller (123) is configured to weight the transmission signals.

11. The fill level measurement device (105) according to any of claims 1 to 10, wherein the antenna device (201, 203) is configured as a two-wire device, wherein a power supply line (130) is also being used for transferring data.

12. The fill level measurement device (105) according to any of claims 2 to 11, wherein the evaluation device (123) is configured to determine a fill level, a volume of an object (104), a mass of an object (104) and/or a surface structure (120) of an object (104).

13. A method for operating an antenna device (201, 203) of a fill level measurement device (105) for determining a fill level and/or for determining a surface structure (120) of an object (104), wherein the antenna device comprises an antenna array having at least two transmission devices (202, 207) in predeterminable positions and at least two receiving devices (205, 207) in predeterminable positions, the method comprising:
exciting the at least two transmission devices alternately, such that each of the at least two receiving devices receives a transmission signal generated and transmitted by each of the at least two transmission devices; and
exciting the at least two transmission devices in joint for transmission of transmission signals at a predeterminable moment, wherein the transmission signals are coherent with respect to each other, such that, due to a superposition of the two transmission signals transmitted by the at least two transmission devices, each of the at least two receiving devices receives a transmission signal generated by a single virtual transmission device (704);
wherein the virtual transmission device is arranged in a predeterminable position which differs from the predeterminable positions of the at least two transmission devices.

14. A Program element for operating an antenna device (201, 203) of a fill level measurement device (105) for determining a fill level and/or for determining a surface structure (120) of an object (104), wherein the antenna device comprises at least two transmission devices (202, 207) in predeterminable positions and at least two receiving devices (205, 207) in predeterminable positions,
wherein the program element, when it is executed by a processor of the antenna device, instructs the antenna device to carry out the method according to claim 13.

15. A computer-readable medium, on which a program code is stored, which, when it is executed by a processor, carries out the method according to claim 13.

## Revendications

1. Appareil de mesure de niveau de remplissage (105) pour déterminer un niveau de remplissage et/ou pour déterminer une structure de surface (120) d'un objet (104) avec un dispositif d'antenne (201, 203), le dispositif d'antenne comportant :
un dispositif de commande (111),
un groupe d'antennes comportant :
au moins deux dispositifs d'émission (202, 207) dans des positions pouvant être prédéfinies,
au moins deux dispositifs de réception (205, 207) dans des positions pouvant être prédéfinies,
dans lequel le dispositif de commande (111) est conçu pour exciter individuellement au moins deux dispositifs d'émission (202, 207) de manière alternée (t1, t2, t3, t4) en vue d'une émission, de sorte que chacun des au moins deux dispositifs de réception (205, 207) reçoive un signal d'émission généré et émis par chacun des au moins deux dispositifs d'émission, et
dans lequel le dispositif de commande (111) est en outre conçu pour exciter conjointement les au moins deux dispositifs d'émission à un instant pouvant être prédéfini (t5) de manière à émettre respectivement un signal d'émission, dans lequel les signaux d'émission sont cohérents les uns par rapport aux autres de sorte que, sur la base d'une superposition de signaux des signaux d'émission émis par les au moins deux dispositifs d'émission, chacun des au moins deux dispositifs de réception reçoive un signal d'émission généré par un seul dispositif d'émission virtuel (704),
dans lequel le dispositif d'émission virtuel (704) est agencé dans une position (401) pouvant être prédéfinie qui est différente des positions pouvant être prédéfinies des au moins deux dispositifs d'émission (205, 207).

2. Appareil de mesure de niveau de remplissage selon la revendication 1, comportant en outre :
un dispositif d'évaluation (123),
dans lequel le dispositif de commande (111) est en outre conçu pour qu'il détermine l'instant pouvant être prédéfini (t5) en utilisant au moins deux schémas temporels différents,
dans lequel le dispositif de commande est en outre conçu pour exciter de manière alternée les au moins deux dispositifs d'émission (202, 207) selon un premier schéma temporel pouvant être prédéfini (t1, t2, t3, t4) en vue d'une émission, de sorte que les signaux d'émission générés par les au moins deux dispositifs d'émission (202, 207) lors de la réception puissent être associés aux au moins deux dispositifs de réception (205, 207) de chacun des au moins deux dispositifs d'émission (202, 207),
dans lequel le dispositif de commande (111) est en outre conçu pour exciter conjointement les au moins deux dispositifs d'émission (202, 207) selon un second schéma temporel pouvant être prédéfini (t5) en vue d'une émission, de sorte que les signaux d'émission générés par les au moins deux dispositifs d'émission (202, 207) lors de la réception semblent provenir d'un seul dispositif d'émission virtuel (704) avec les au moins deux dispositifs de réception (205, 207) à une distance des dispositifs d'émission (202, 207) pouvant être prédéfinie,
dans lequel le dispositif d'évaluation (123) est conçu pour recevoir, pendant que le premier schéma temporel pouvant être prédéfini (t1, t2, t3, t4) est actif et pendant que le second schéma temporel pouvant être prédéfini (t5) est actif, des signaux de réception via les au moins deux dispositifs de réception (205, 207), et
dans lequel le dispositif d'évaluation (123) est conçu pour former, à partir des positions pouvant être prédéfinies des dispositifs d'émission (202, 207) et/ou à partir des positions pouvant être prédéfinies des dispositifs de réception (205, 207) en utilisant les signaux de réception reçus pendant le premier schéma temporel (t1, t2, t3, t4) et pendant le second schéma temporel (t5), une courbe d'écho pour une direction spatiale pouvant être prédéfinie.

3. Appareil de mesure de niveau de remplissage selon la revendication 1 ou 2, dans lequel les positions pouvant être prédéfinies de dispositifs d'émission (202, 207) et/ou de dispositifs de réception (205, 207) voisins sont situées à une distance (d₀) qui est inférieure ou égale à la demie longueur d'onde des signaux utilisés.

4. Appareil de mesure de niveau de remplissage selon l'une des revendications 1 à 3, dans lequel le dispositif d'évaluation (123) est conçu pour former un réseau virtuel (713, 913) par un fonctionnement alterné dans le temps des dispositifs d'émission et une évaluation correspondante des signaux de réception du groupe d'antennes (202, 205, 207).

5. Appareil de mesure de niveau de remplissage selon l'une des revendications 1 à 4, dans lequel les au moins deux dispositifs d'émission (202, 207) sont agencés par rapport à un point de référence (401, 252), et
dans lequel le dispositif d'émission virtuel (704) apparaît positionné au point de référence (401, 252).

6. Appareil de mesure de niveau de remplissage selon l'une des revendications 1 à 5, dans lequel les signaux d'émission générés par les au moins deux dispositifs d'émission (202, 207) peuvent être affectés en utilisant un procédé de multiplexage dans le temps et/ou un procédé de codage respectivement de l'un des au moins deux dispositifs d'émission.

7. Appareil de mesure de niveau de remplissage selon l'une des revendications 1 à 6, dans lequel le dispositif de commande (111) est conçu pour exciter les au moins deux dispositifs d'émission (202, 207) avec un signal d'onde continue modulé en fréquence en vue d'une émission.

8. Appareil de mesure de niveau de remplissage selon l'une des revendications 1 à 7, dans lequel l'un des au moins deux dispositifs d'émission (202) et l'un des au moins deux dispositifs de réception (205) est réalisé sous la forme d'un dispositif d'émission/réception commun (207) qui peut aussi bien envoyer un signal que recevoir un signal.

9. Appareil de niveau de mesure de remplissage selon l'une des revendications 1 à 8, dans lequel la somme des durées du premier schéma temporel (t1, t2, t3, t4) pouvant être prédéfini et du second schéma temporel (t5) pouvant être prédéfini détermine la durée d'un cycle de mesure.

10. Appareil de mesure de niveau de remplissage selon l'une des revendications 1 à 9, dans lequel le dispositif d'évaluation (123) est conçu pour effectuer une pondération des signaux de réception, et/ou
dans lequel le dispositif de commande (111) est conçu pour effectuer une pondération des signaux d'émission.

11. Appareil de mesure de niveau de remplissage selon l'une des revendications 1 à 10, dans lequel le dispositif d'antenne (201, 203) est réalisé sous la forme d'un appareil à deux conducteurs, dans lequel une ligne d'alimentation en énergie (130) est également utilisée pour la transmission de données.

12. Appareil de mesure de niveau de remplissage selon l'une des revendications 2 à 11, dans lequel le dispositif d'évaluation (123) est conçu pour déterminer un niveau de remplissage, un volume d'un objet (104), une masse d'un objet (104) et/ou une structure de surface (120) d'un objet (104).

13. Procédé pour faire fonctionner un dispositif d'antenne (201, 203) d'un appareil de mesure de niveau de remplissage (105) afin de déterminer un niveau de remplissage et/ou de déterminer une structure de surface (120) d'un objet (104), dans lequel le dispositif d'antenne comporte un groupe d'antennes ayant au moins deux dispositifs d'émission (202, 207) dans des positions pouvant être prédéfinies et ayant au moins deux dispositifs de réception (205, 207) dans des positions pouvant être prédéfinies, le procédé comportant les étapes consistant à :
exciter les au moins deux dispositifs d'émission de manière alternée et de sorte que chacun des au moins deux dispositifs d'émission reçoive un signal d'émission émis et généré par chacun des au moins deux dispositifs d'émission, et
exciter les au moins deux dispositifs d'émission pour émettre conjointement respectivement un signal d'émission à un instant pouvant être prédéfini, les signaux d'émission étant cohérents les uns par rapport aux autres, de sorte que, sur la base d'une superposition de signaux des signaux d'émission émis par les au moins deux dispositifs d'émission, chacun des au moins deux dispositifs de réception reçoive un signal d'émission généré par un seul dispositif d'émission virtuel (704),
dans lequel le dispositif d'émission virtuel est agencé dans une position pouvant être prédéfinie qui est différente des positions pouvant être prédéfinies des au moins deux dispositifs d'émission.

14. Elément de programme pour faire fonctionner un dispositif d'antenne (201, 203) d'un appareil de mesure de niveau de remplissage (105) afin de déterminer un niveau de remplissage et/ou de déterminer une structure de surface (120) d'un objet (104), dans lequel le dispositif d'antenne comporte au moins deux dispositifs d'émission (202, 207) dans des positions pouvant être prédéfinies et au moins deux dispositifs de réception (205, 207) dans des positions pouvant être prédéfinies,
dans lequel l'élément de programme, lorsqu'il est exécuté par un processeur d'un dispositif d'antenne, amène le dispositif d'antenne à mettre en oeuvre le procédé selon la revendication 13.

15. Support de mémorisation lisible par ordinateur sur lequel est mémorisé un code de programme qui, lorsqu'il est exécuté par un processeur, met en oeuvre le procédé selon la revendication 13.
